# NEUE EUROPÄISCHE PATENTSCHRIFT

(11) **EP 1 183 313 B2**
(45) Veröffentlichungstag und Bekanntmachung des Hinweises auf die Entscheidung über den Einspruch: **05.01.2011**
(45) Hinweis auf die Patenterteilung: 16.02.2005
(21) Anmeldenummer: 00922635.8
(22) Anmeldetag: 13.04.2000
(51) Int. Cl.: C09D 5/02, C09D 7/14

(54) **WÄSSRIGER BESCHICHTUNGSSTOFF UND MODULSYSTEM ZU SEINER HERSTELLUNG**
AQUEOUS COATING MATERIAL AND MODULAR SYSTEM FOR PRODUCING SAME
SUBSTANCE DE REVETEMENT AQUEUSE ET SYSTEME MODULAIRE POUR LA PREPARER

(30) Priorität: 08.05.1999 DE 19921457
(43) Veröffentlichungstag der Anmeldung: 06.03.2002
(73) Patentinhaber: BASF Coatings GmbH, 48165 Münster (DE)
(72) Erfinder: LETTMANN, Bernhard, D-48317 Drensteinfurt (DE)
(74) Vertreter: Leifert & Steffan
(86) Internationale Anmeldenummer: PCT/EP2000/003355
(87) Internationale Veröffentlichungsnummer: WO 2000/068327

(56) Entgegenhaltungen:
- EP-A- 0 399 427
- EP-A- 0 468 293
- EP-A- 0 471 972
- DE-A- 4 301 991

## Beschreibung

Die vorliegende Erfindung betrifft ein neues Modulsystem (Baukastensystem, Mischsystem) für die Herstellung neuer wäßriger Beschichtungsstoffe in genau abstimmbaren Farbtönen und optischen Effekten. Des weiteren betrifft die vorliegende Erfindung die Verwendung des neuen Modulsystems in der Autoserien- und -reparaturlackierung sowie in der Kunststofflackierung.

Aus der deutschen Patentanmeldung DE-A-41 10 520 ist ein Mischsystem bekannt, welches geeignet ist, wäßrige Beschichtungsstoffe in genau abstimmbaren Farbtönen und optischen Effekten nach Bedarf herzustellen. Dieses bekannte Mischsystem enthält im wesentlichen wasserfreie farb-und/oder effektgebende Basisfarben und mindestens einen wäßrigen pigmentfreien Mischlack. Dieses Mischsystem und die hieraus hergestellten Beschichtungsstoffe erfüllen aufgrund ihrer Variationfähigkeit im wesentlichen die stetig steigenden Anforderungen des Marktes. Indes können sie hinsichtlich der Deckkraft noch weiter verbessert werden.

Aus der Patentschrift EP-A-0 608 773 ist ein Modulsystem bekannt, welches ein Effektmodul, das mindestens 20 Gew.-% Wasser enthält, und einen wäßrigen pigmentfreien Mischlack aufweist. Auch dieses bekannte Modulsystem gestattet es, Beschichtungsstoffe in genau abstimmbaren Farbtönen und optischen Effekten herzustellen. Nachteilig ist, daß sich Metallic-Effektpigmente auf der Basis von Aluminium in dem Effektmodul wegen dessen hohen Wassergehalts häufig unter Wasserstoffentwicklung zersetzen. Hierdurch wird die Lagerstabilität des Effektmoduls verschlechtert.

Aus der Patentschrift EP-A-0 614 951 ist ein Modulsystem bekannt, welches ein Farbmodul mit mindestens 20 Gew.-% Wasser und einen wäßrigen pigmentfreien Mischlack aufweist. Dieses Modulsystem gestattet indes nur die Herstellung von Unidecklacken.

In der Patentschrift EP-A-0 471 972 wird ein Modulsystem beschrieben, welches ein im wesentlichen wasserfreies Effektmodul mit Metallic-Effektpigmenten, ein wäßriges Farbmodul und ein Rheologiemodul enthält. Alternativ kann anstelle des wäßrigen Farbmoduls ein wäßriger pigmentfreien Mischlack verwendet werden. Wesentlich für dieses bekannte Modulsystem ist, daß die Farbe des hieraus hergestellten Beschichtungsstoffs nur über das wäßrige Farbmodul eingestellt werden kann. Außerdem können die mit Hilfe dieses Modulsystems hergestellten Beschichtungsstoffe in ihrer Deckkraft noch weiter verbessert werden.

Aufgabe der vorliegenden Erfindung ist es, ein neues Modulsystem bereitzustellen, das insgesamt eine höhere Lagerstabilität als die bislang bekannten Modulsysteme aufweist und das es gestattet, in einfacher Weise bei Bedarf Beschichtungsstoffe in genau abstimmbaren Farbtönen und optischen Effekten herzustellen, wobei die Beschichtungsstoffe Lackierungen liefern sollen, welche eine höhere Deckkraft als die Lackierungen des Standes der Technik aufweisen.

Demgemäß wurde das neue Modulsystem für die Herstellung wäßriger Beschichtungsstoffe gefunden, welches mindestens die folgenden wesentlichen Bestandteile enthält:
(I) mindestens ein im wesentlichen wasserfreies Farb- und/oder Effektmodul, enthaltend
   (A1) mindestens eine im wesentlichen farb- und/oder effektgebende Basisfarbe, enthaltend
      (a11) 10 - 80 Gew.-%, mindestens ein wasserverdünnbares oder wasserdispergierbares Bindemittel,
      (a12) 0,5 - 70 Gew.-%, mindestens ein Effektpigment und/oder mindestens ein farbgebendes Pigment und
      (a13) 10 - 89,5 Gew.-%, mindestens ein organisches Lösemittel sowie gegebenenfalls enthaltend
      (a14) mindestens ein Vernetzungsmittel und/oder
      (a15) mindestens einen Hilfs- und/oder Zusatzstoff (Lackadditiv);
   wobei die Summe der Gewichtsteile der Komponenten (a11) bis (a13) jeweils 100 Gew.-% beträgt;
(II) mindestens ein wäßriges Farbmodul, enthaltend
   (A2) mindestens eine wäßrige farbgebende Basisfarbe, enthaltend
      (a21) 10 - 80 Gew.-%, mindestens ein in Wasser lösliches oder dispergierbares Bindemittel,
      (a22) 1 - 70 Gew.-%, mindestens ein anorganisches farbgebendes Pigment,
      (a23) 89 - 20 Gew.-% Wasser und
      (a24) 0 - 20 Gew.-%, mindestens ein organisches Lösemittel sowie gegebenenfalls enthaltend
      (a25) mindestens ein Vernetzungsmittel und/oder
      (a26) mindestens einen Hilfs- und/oder Zusatzstoff (Lackadditiv);
   wobei die Summe der Gewichtsteile der Komponenten (a21) bis (a24) jeweils 100 Gew.-% beträgt; und
(III) mindestens ein wäßriges pigmentfreies Mischlackmodul, enthaltend
   (B) mindestens einen pigmentfreien Mischlack, enthaltend
      (b1) 10 - 80 Gew.-%, mindestens ein in Wasser lösliches oder dispergierbares Bindemittel und
      (b2) 20 - 90 Gew.-% Wasser sowie gegebenenfalls enthaltend
      (b3) mindestens ein Vernetzungsmittel und/oder
      (b4) mindestens einen Hilfs- und/oder Zusatzstoff (Lackadditiv);
   wobei die Summe der Gewichtsanteile der Bestandteile (b1) und (b2) jeweils 100 Gew.-% beträgt; sowie enthaltend
(IV) mindestens ein pigmentfreies Rheologiemodul, enthaltend
   (C) 50 - 99,5 Gew.-%, bezogen auf die Gesamtmenge des Rheologiemoduls (IV), ein wäßriges Medium, enthaltend
      (c1) 0,5 - 50 Gew.-%, bezogen auf die Gesamtmenge des Rheologiemoduls (IV), mindestens ein die Rheologie steuerndes Additiv;
mit der Maßgabe, daß es sich bei den Lackadditiven (a15), (a26) und/oder (b4) auch um mindestens ein die Rheologie steuerndes Additiv (c1) handeln kann, wobei die Bindemittel (a11), (a21) und (b1) Polyurethanharze sind.

Im Rahmen der vorliegenden Erfindung bezeichnet der Begriff "Modul" ein standardisiertes gebrauchsfertiges Handelsprodukt, dessen anwendungstechnisches Eigenschaftsprofil den Eigenschaftsprofilen andere Module genau angepaßt ist und diese ergänzt, so daß die Module insgesamt zu einem Modulsystems kombiniert werden können.

Im folgenden wird das neue Modulsystem für die Herstellung wäßriger Beschichtungsstoffe als "erfindungsgemäßes Modulsystem" bezeichnet.

Des weiteren wurde ein neues Verfahren zur Herstellung eines wäßrige Beschichtungsstoffs mit genau festgelegter Tönung und optischem Effekt gefunden, bei welchem man den wäßrigen Beschichtungsstoff durch Vermischen getrennt voneinander gelagerter Module unterschiedlicher stofflicher Zusammensetzung und Funktion kurz vor der Applikation des Beschichtungsstoffs herstellt und bei welchem man mindestens
(I) mindestens ein im wesentlichen wasserfreies Farb- und/oder Effektmodul, enthaltend
   (A1) mindestens eine im wesentlichen wasserfreie farb- und/oder effektgebende Basisfarbe, enthaltend
      (a11) 10 - 80 Gew.-%, mindestens ein wasserverdünnbares oder wasserdispergierbares Bindemittel,
      (a12) 0,5 ― 70 Gew.-%, mindestens ein Effektpigment und/oder mindestens ein farbgebendes Pigment und
      (a13) 10 ― 89,5 Gew.-%, mindestens ein organisches Lösemittel sowie gegebenenfalls enthaltend
      (a14) mindestens ein Vernetzungsmittel und/oder
      (a15) mindestens einen Hilfs- und/oder Zusatzstoff (Lackadditiv);
   wobei die Summe der Gewichtsteile der Komponenten (a11) bis (a13) jeweils 100 Gew.-% beträgt;
(II) mindestens ein wäßriges Farbmodul, enthaltend
   (A2) mindestens eine wäßrige farbgebende Basisfarbe, enthaltend
      (a21) 10 - 80 Gew.-%, mindestens ein wasserverdünnbares oder wasserdispergierbares Bindemittel,
      (a22) 1 - 70 Gew.-%, mindestens ein anorganisches farbgebendes Pigment,
      (a23) 89 - 20 Gew.-%, Wasser und
      (a24) 0 bis 20 Gew.-%, mindestens ein organisches Lösemittel sowie gegebenenfalls enthaltend
      (a25) mindestens ein Vernetzungsmittel und/oder
      (a26) mindestens einen Hilfs- und/oder Zusatzstoff (Lackadditiv);
   wobei die Summe der Gewichtsteile der Komponenten (a21) bis (a24) jeweils 100 Gew.-% beträgt; und
(III) mindestens ein pigmentfreies Mischlackmodul, enthaltend
   (B) mindestens einen wäßrigen pigmentfreien Mischlack, enthaltend
      (b1) 10 - 80 Gew.-%, mindestens ein in Wasser lösliches oder dispergierbares Bindemittel und
      (b2) 20 - 90 Gew.-% Wasser sowie gegebenenfalls enthaltend
      (b3) mindestens ein Vernetzungsmittel und/oder
      (b4) mindestens einen Hilfs- und/oder Zusatzstoff (Lackadditiv);
   wobei die Summe der Gewichtsanteile der Bestandteile (b1) und (b2) jeweils 100 Gew.-% beträgt; sowie enthaltend
(IV) mindestens ein pigmentfreies Rheologiemodul, enthaltend
   (C) 50 - 99,5 Gew.-%, bezogen auf die Gesamtmenge des Rheologiemoduls (IV), ein wäßriges Medium, enthaltend
      (c1) 0,5 - 50 Gew.-% bezogen auf die Gesamtmenge des Rheologiemoduls (IV), mindestens ein die Rheologie steuerndes Additiv;
mit der Maßgabe, daß es sich bei den Lackadditiven (a15), (a26) und/oder (b4) auch um mindestens ein die Rheologie steuerndes Additiv (c1) handeln kann; miteinander vermischt, wobei die Bindemittel (a11), (a21) und (b1) Polyurethanharze sind.

Im folgenden wird das neue Verfahren zur Herstellung des erfindungsgemäßen Beschichtungsstoffs als "erfindungsgemäßes Verfahren" bezeichnet.

Im Hinblick auf den Stand der Technik war es überraschend und für den Fachmann nicht vorhersehbar, daß mit Hilfe des erfindungsgemäßen Modulsystems die der Erfindung zugrundeliegende Aufgabe gelöst werden konnte. Insbesondere war es überraschend, daß das erfindungsgemäßen Modulsystemen eine Lagerstabilität aufweist, die derjenigen der bekannten Modulsystemen entspricht oder diese sogar übertrifft. Des weiteren war es überraschend, daß das erfindungsgemäßen Modulsystemen bei ansonsten gleichen oder sogar besseren anwendungstechnischen Eigenschaften erfindungsgemäße Beschichtungsstoffe mit signifikant höherem Pigmentgehalt liefert, mit deren Hilfe sich Lackierungen herstellen lassen, die in ihrer Deckkraft den Lackierungen des Standes der Technik überlegen sind. Insbesondere überraschte, daß auch die Lagerstabilität der einzelnen Module diejenige der bekannten Module übertrifft. Nicht zuletzt überraschte der wesentliche Vorteil, daß der wäßrige Farbmodul (II) und der wäßrige pigmentfreie Mischlackmodul (III) einerseits und der im wesentlichen wasserfreie Farb- und/oder Effektmodul (I) andererseits sehr gut miteinander verträglich sind und keinerlei Probleme beim Vermischen bereiten. Darüber hinaus erweist es sich als ein weiterer wesentlicher Vorteil des erfindungsgemäßen Modulsystems, daß es - sofern dies in der Praxis erforderlich wird - wie das aus der deutschen Patentanmeldung DE-A-40 10 520 bekannte Mischsystem angewendet werden kann.

Das erfindungsgemäße Modulsystem enthält demnach mindestens ein im wesentlichen wasserfreies Farb- und/oder Effektmodul (I) mindestens ein wäßriges Farbmodul (II) und mindestens ein wäßriges pigmentfreies Mischlackmodul (III) sowie mindestens ein pigmentfreies Rheologiemodul (IV). Im Rahmen der vorliegenden Erfindung bedeutet dies, daß neben dem wäßrigen Farbmodul (II) stets mindestens ein im wesentlichen wasserfreies Modul (I) vorliegt, welches die Funktion der Farbgebung teilweise übernimmt.

Somit enthält die erste Variante des erfindungsgemäßen Modulsystems mindestens ein im wesentlichen wasserfreies Farbmodul (I), welches somit die Funktion der Farbgebung teilweise übernimmt, mindestens ein wäßriges Farbmodul (II) und mindestens ein wäßriges pigmentfreies Mischlackmodul (III), sowie mindestens ein pigmentfreies Rheologiemodul (IV). Diese Variante dient der Herstellung von farbigen Unidecklackierungen und Mehrschichtlackierungen, welche im wesentlichen frei von optischen Effekten wie Metallic-Effekten sind.

Erfindungsgemäß enthält das erfindungsgemäße Modulsystem in seiner zweiten Variante, die erfindungsgemäß bevorzugt ist, mindestens ein im wesentlichen wasserfreies Farb- und Effektmodul (I), welches somit die Funktionen der Effektgebung ganz und der Farbgebung teilweise übernimmt, mindestens ein wäßriges Farbmodul (II) und mindestens ein wäßriges pigmentfreies Mischlackmodul (III), sowie mindestens ein pigmentfreies Rheologiemodul (IV).

Erfindungsgemäß enthält das erfindungsgemäße Modulsystem in seiner dritten Variante, die erfindungsgemäß gleichfalls bevorzugt ist, mindestens ein im wesentlichen wasserfreies Effektmodul (I), welches somit alleine der Effektgebung dient, mindestens ein im wesentlichen wasserfreies Farbmodul (I), mindestens ein wäßriges Farbmodul (II) und mindestens ein wäßriges pigmentfreies Mischlackmodul (III), sowie mindestens ein pigmentfreies Rheologiemodul (IV).

Das im wesentlichen wasserfreie Farb- und/oder Effektmodul (I), das wäßrige Farbmodul (II) und/oder das wäßrige pigmentfreie Mischlackmodul (III) kann oder können mindestens ein die Rheologie steuerndes Additiv enthalten. Erfindungsgemäß ist es von Vorteil, wenn mindestens eines dieser Additive lediglich in dem wäßrige Farbmodul (II) und/oder dem wäßrigen pigmentfreien Mischlackmodul (III), insbesondere lediglich in dem wäßrigen pigmentfreien Mischlackmodul (III), enthalten ist.

Indes resultieren erfindungsgemäß zusätzliche besondere Vorteile, wenn das die Rheologie steuernde Additiv zusätzlich oder lediglich, insbesondere aber lediglich, in dem pigmentfreien Rheologiemodul (IV) vorliegt. Erfindungsgemäße Modulsysteme, welche mindestens ein pigmentiertes Rheologiemodul (IV) enthalten, werden deshalb besonders bevorzugt verwendet.

Der erste wesentliche Bestandteil des erfindungsgemäßen Modulsystems ist mindestens ein im wesentlichen wasserfreies Farb- und/oder Effektmodul (I).

Im Rahmen der vorliegenden Erfindung bedeutet der Passus "im wesentlichen wasserfrei", daß die betreffenden Farb- und/oder Effektmodule (I) gar kein Wasser oder das Wasser nur in solchen Mengen enthalten, wie sie aufgrund des Wassergehalts der Ausgangsprodukte resultieren. Vorzugsweise liegen diese Mengen unterhalb 5 Gew.-%, besonders bevorzugt 3 Gew.-%, ganz besonders bevorzugt 2 Gew.-% und insbesondere 1 Gew.-% Wasser, bezogen auf die Gesamtmenge des betreffenden Farb- und/oder Effektmoduls (I).
Des weiteren weist der Begriff "Farb- und/oder Effektmodul" darauf hin, daß mit Hilfe dieses Moduls die Farbtönung und/oder der optische Effekt des hiermit hergestellten Beschichtungsstoffs eingestellt wird. Demnach handelt es sich bei den erfindungsgemäß zu verwendenden Modul (I) entweder um ein Farbmodul (I), ein Effektmodul (I) oder ein Farb- und Effektmodul (I).

Das erfindungsgemäß zu verwendende Farbmodul (I) wird insbesondere für die Herstellung von erfindungsgemäßen Beschichtungsstoffen mit genau abgestimmter Farbtönung für die Herstellung von Unidecklacken und Basislacken, vorzugsweise Basislacken, verwendet. Mit Hilfe des erfindungsgemäß zu verwendenden Effektmoduls (I) wird der optische Effekt der erfindungsgemäßen Beschichtungsstoffe eingestellt. Mit Hilfe des erfindungsgemäß zu verwendenden Farb- und Effektmoduls (I) kann sowohl die Farbtönung als auch der optische Effekt der erfindungsgemäßen Beschichtungsstoffe genau eingestellt werden.

Der wesentliche Bestandteil des erfindungsgemäß zu verwendenden Effektmoduls (I) ist mindestens eine im wesentlichen wasserfreie farb- und/oder effektgebende Basisfarbe (A1). Für sie gilt das hinsichtlich des Effektmoduls (I) Gesagte sinngemäß.

Der erste wesentliche Bestandteile der Basisfarbe (A1) ist mindestens ein wasserverdünnbares oder wasserdispergierbares Bindemittel (a11).

Als Bindemittel (a11) kommen grundsätzlich alle Polyurethanharz-Bindemittel in Betracht, wie sie auch in den bekannten, in den Patentschriften DE-A- 41 10 520, EP-A- 0 608 773 oder EP-A-0 614 951 beschriebenen Modulsystemen verwendet werden.

Die geeigneten in wasserlöslichen oder dispergierbaren Bindemittel (a11) sind oligomere oder polymere Harze. Die Bindemittel (a11) sind physikalisch trocknend oder aber sie enthalten funktionelle Gruppen, die mit den nachstehend beschriebenen Vernetzungsmitteln (a14), (a25) oder (b3) reagieren können.

Beispiele geeigneter funktioneller Gruppen sind Amino-, Thio-, Carbonat-, Epoxid- und/oder Hydroxylgruppen, von denen die Hydroxylgruppen besonders vorteilhaft sind und daher erfindungsgemäß besonders bevorzugt werden.

Hinsichtlich der Herstellbarkeit, der Handhabung und der besonders vorteilhaften Eigenschaften der hiermit hergestellten erfindungsgemäßen Beschichtungsstoffe bieten die Polyurethane (a11), ganz besondere Vorteile, weswegen sie erfindungsgemäß verwendet werden.

Vorzugsweise sind die Bindemittel (a11) für sich gesehen in Wasser löslich oder dispergierbar.

Beispiele geeigneter wasserlöslicher oder -dispergierbarer Bindemittel (a11) enthalten entweder
(i) funktionelle Gruppen, die durch Neutralisationsmittel und/oder Quaternisierungsmittel in Kationen überführt werden können, und/oder kationische Gruppen
   oder
(ii) funktionelle Gruppen, die durch Neutralisationsmittel in Anionen überführt werden können, und/oder anionische Gruppen
   und/oder
(iii) nichtionische hydrophile Gruppen.

Beispiele geeigneter erfindungsgemäß zu verwendender funktioneller Gruppen (i), die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen (i) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber tertiäre Sulfoniumgruppen.

Beispiele geeigneter erfindungsgemäß zu verwendender funktioneller Gruppen (ii), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (ii) sind Carboxylat-, Sulfonat- oder Phosphonatgruppen, insbesondere Carboxylatgruppen.

Beispiele geeigneter erfindungsgemäß zu verwendender nichtionischer hydrophiler Gruppen (iii) sind Polyethergrupppen, insbesondere Poly(alkylenether)gruppen.

Die Auswahl der Gruppen (i) oder (ii) ist so zu treffen, daß keine störenden Reaktionen mit den funktionelle Gruppen, die mit den nachstehend beschriebenen Vernetzungsmitteln (a14), (a25) oder (b3) reagieren können, möglich sind. Der Fachmann kann daher die Auswahl in einfacher Weise anhand seines Fachwissens treffen.

Beispiele geeigneter Neutralisationsmittel für in Kationen umwandelbare funktionelle Gruppen (i) sind anorganische und organische Säuren wie Schwefelsäure, Salzsäure, Phosphorsäure, Ameisensäure, Essigsäure, Milchsäure, Dimethylolpropionsäure oder Zitronensäure.

Beispiele für geeignete Neutralisationsmittel für in Anionen umwandelbare funktionelle Gruppen (ii) sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Die Neutralisation kann in organischer Phase oder in wäßriger Phase erfolgen. Bevorzugt wird als Neutralisationsmittel Dimethylethanolamin eingesetzt.

Im allgemeinen wird die Menge an Neutralisationsmittel wird so gewählt, daß 1 bis 100 Äquivalente, bevorzugt 50 bis 90 Äquivalente der funktionellen Gruppen (i) oder (ii) des Bindemittels (a11) neutralisiert werden.

Hinsichtlich der Herstellbarkeit, der Handhabung und der besonders vorteilhaften Eigenschaften der hiermit hergestellten erfindungsgemäßen Beschichtungsstoffe und Modulsysteme bieten die Bindemittel (a11), welche die anionenbildenden Gruppen und/oder Anionen (ii), insbesondere die Carbonsäure- und/oder die Carboxylatgruppen enthalten, ganz besondere Vorteile, weswegen sie erfindungsgemäß ganz besonders bevorzugt verwendet werden.

Erfindungsgemäß ist es von Vorteil, wenn die Bindemittel (a11) ein zahlenmittleres Molekulargewicht Mn von 750 bis 2.000.000, vorzugsweise 750 bis 1.000.000, besonders bevorzugt 750 bis 500.000 und insbesondere 750 bis 300.000 Dalton, eine Uneinheitlichkeit des Molekulargewichts U von 1,0 bis 10, vorzugsweise 1,0 bis 8, besonders bevorzugt 1,0 bis 6 und insbesondere 1,0 bis 4, wenn eine ionische Stabilisierung angestrebt ist, eine Säurezahl von 10 bis 150, vorzugsweise 15 bis 100, besonders bevorzugt 20 bis 80 und insbesondere 25 bis 70 mg KOH/g und, sofern Hydroxylgruppen enthalten sind, eine OH-Zahl von 10 bis 350, vorzugsweise 15 bis 250, besonders bevorzugt 20 bis 200 und insbesondere 25 bis 150 mg KOH/g aufweisen.

Innerhalb des vorstehend angegebenen ganz besonders vorteilhaften Bereichs des zahlenmittleren Molekulargewichts Mn von 750 bis 300.000 Dalton ist derjenige von 750 bis 30.000 Dalton hervorzuheben, weil Bindemittel (a11) dieses zahlenmittleren Molekulargewichts Mn hinsichtlich der anwendungstechnischen Eigenschaften der resultierenden Basisfarben (A1) zusätzliche Vorteile bieten. Weitere Vorteile ergeben sich, wenn die Bindemittel (a11) ein zahlenmittleres Molekulargewicht Mn von 850 bis 20.000 Dalton und insbesondere 950 bis 15.000 Bauten aufweisen.

Beispiele ganz besonders bevorzugter erfindungsgemäß zu verwendender Bindemittel (a11) sind
(a113) die nachstehend beschriebenen, Carbonsäure- und/oder Carboxlylatgruppen und gegebenenfalls Hydroxylgruppen enthaltende Polyurethanharze (a11).

Geeignete säuregruppenhaltige sowie ggf. hydroxylgruppenhaltige erfindungsgemäß zu verwendende Polyurethanharze (a113) werden beispielsweise in den folgenden Schriften beschriebenen: EP-A-0 089 497, EP-A-0 158 099, EP-A-0 195 931, EP-A-0 354 261, EP-A-0 422 357, EP-A- 0 424 705,EP-A-0 355 433, DE-A-35 45 618, DE-A-38 13 866. DE-A-32 10 051, DE-A-26 24 442, DE-A-37 39 332, DE-A-36 28 124, DE-A-29 26 584, DE-A-33 21 180, DE-A-38 13 866, DE-A-40 05 961, US-A-4,719,132, US-A-4,558,090 und US-A-4,489,135.

Insbesondere werden Polyurethanharze (a113) eingesetzt, die durch Umsetzung von isocyanatgruppenhaltigen Präpolymeren mit gegenüber Isocyanatgruppen reaktiven Verbindungen herstellbar sind.

Die Herstellung von isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150°C, bevorzugt 50 bis 130°C, in organischen Lösemitteln, die nicht mit Isocyanaten reagieren können, erfolgen. Das Äquivalentverhältnis von NCO- zu OH-Gruppen liegt zwischen 2,0 : 1,0 und > 1,0 : 1,0, bevorzugt zwischen 1,4 : 1 und 1,1 : 1.

Die zur Herstellung des Präpolymeren eingesetzten Polyole können niedermolekular und/oder hochmolekular sein und reaktionsträge anionische bzw. zur Anionenbildung befähigte Gruppen enthalten. Es können auch niedermolekulare Polyole mit einem Molekulargewicht von 60 bis zu 400 Dalton, zur Herstellung der isocyanatgruppenhaltigen Präpolymere mitverwendet werden. Es werden dabei Mengen von bis zu 30 Gew.-% der gesamten Polyol-Bestandteile, bevorzugt etwa 2 bis 20 Gew.-%, eingesetzt.

Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer zahlenmittleren Molerkulargewicht Mn von 400 bis 5000 Dalton bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden.

Bevorzugt besteht die zur Herstellung der Polyurethanharze (a113) eingesetzte Alkoholkomponente zumindest zu einem gewissen Anteil aus
u₁) mindestens einem Diol der Formel 1 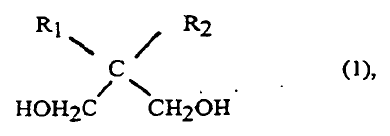 in der R₁ und R₂ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R₁ und/oder R₂ nicht Methyl sein darf, und/oder
u₂) mindestens einem Diol der Formel 2 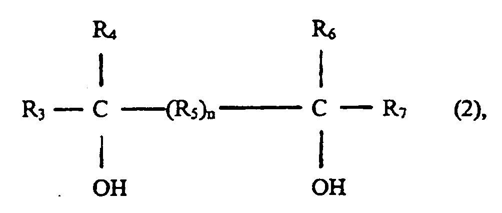 in der R₃, R₄, R₆ und R₇ jeweils gleiche oder verschiedene Reste darstellen und für einen Alkylrest mit 1 bis 6 C-Atomen, einen Cycloalkylrest oder einen Arylrest stehen und R₅ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Diole (u₁) sind alle Propandiole der Formel 1 geeignet, bei denen entweder R₁ oder R₂ oder R₁ und R₂ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3 oder 2-Cyclo-hexyl-2-methylpropandiol-1,3.

Als Diole (u₂) der allgemeinen Formel 2 können beispielsweise 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Bevorzugt werden als Diole (u₁) 2-Propyl-2-ethylpropandiol-1,3, 2,2-Diethylpropandiol-1,3, 2-Butyl-2-ethylpropandiol-1,3 und 2-Phenyl-2-ethylpropandiol-1,3 und als Komponente (u₂) 2,3-Dimethyl-butandiol-2,3 sowie 2,5-Dimethylhexandiol-2,5 eingesetzt. Besonders bevorzugt werden als Komponente (a₁) 2-Butyl-2-ethyl-propandiol-1,3 sowie 2-Phenyl-2-ethylpropandiol-1,3 und als Komponente (u₂) 2,5-Dimethylhexandiol-2,5 eingesetzt.

Die Diole (u₁) und/oder (u₂) werden üblicherweise in einer Menge von 0,5 bis 15 Gew.-%, bevorzugt 1 bis 7 Gew.-% eingesetzt, jeweils bezogen auf das Gesamtgewicht der zur Herstellung der Polyurethanharze (a113) eingesetzten Aufbaukomponenten.

Als typische multifunktionelle Isocyanate zur Herstellung der Polyurethanharze (a113) werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung. Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Als Beispiele für einsetzbare Polyisocyanate werden Phenylendiisocyanat, Toluylendiisocyanat, Xylylendiisocyanat, Bisphenylendiisocyanat, Naphtylendiisocyanat, Diphenylmethandiisocyanat, Isophorondiisocyanat, Cyclobutandiisocyanat Cyclopentylendiisocyanat, Cyclohexylendiisocyanat, Methylcyctohexylendiisocyanat, Dicyclohexylmethandiisocyanat, Ethylendiisocyanat, Trimethylendiisocyanat, Tetramethylendiisocyanat, Pentamethylendiisocyanat, Hexamethytendiisocyanat, Propylendiisocyanat, Ethylethylendiisocyanat und Trimethylhexandiisocyanat genannt.

Zur Herstellung festkörperreicher Polyurethanharzlösungen (b13) werden insbesondere Diisocyanate der allgemeinen Formel 3 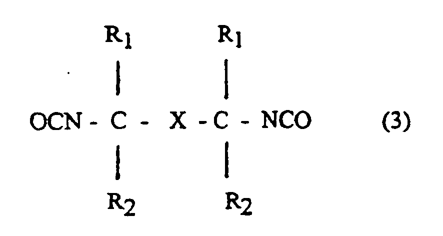 eingesetzt, wobei X für einen zweiwertigen, aromatischen Kohlenwasserstoffrest, vorzugsweise für einen ggf. Halogen-, Methyl- oder Methoxy-substituierten Naphthylen-, Diphenylen- oder 1,2-, 1,3- oder 1,4-Phenylenrest, besonders bevorzugt für einen 1,3-Phenylenrest und R₁ und R₂ für einen Alkylrest mit 1 - 4 C-Atomen, bevorzugt für einen Methylrest, stehen. Diisocyanate der allgemeinen Formel 3 sind bekannt (ihre Herstellung wird beispielsweise in der EP-A-10 1 832, US-A-3,290,350, US-A-4,130,577 und der US-A-4,439,616 beschrieben) und zum Teil im Handel erhältlich (1,3-Bis-(2-isocyanatoprop-2-yl)-benzol wird beispielsweise von der American Cynamid Company unter dem Handelsnamen TMXDI (META)® verkauft).

Weiterhin bevorzugt als Polyisocyanatkomponente sind Diisocyanate der Formel 4: 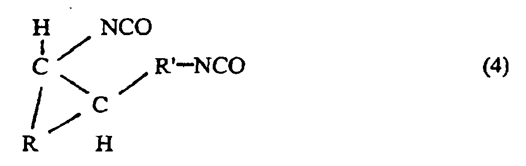 mit
- R: für einen zweiwertigen Alkyl- oder Aralkylrest mit 3 bis 20 Kohlenstoffatomen und
- R': für einen zweiwertigen Alkyl- oder Aralkylrest mit 1 bis 20 Kohlenstoffatomen;

### Insbesondere 1-Isocyanato-2-(3-isocyanatoprop-1-yl)cyclohexan.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze (a113) Verbindungen verwendet werden, die zwei mit Isocyanatgruppen reagierende H-aktive Gruppen und mindestens eine Gruppe enthalten, die die Wasserdispergierbarkeit gewährleistet. Geeignete Gruppen dieser Art sind die vorstehend beschriebenen nichtionischen Gruppen (iii) (z. B. Polyether), die vorstehend beschriebenen anionischen Gruppen (ii), Gemische dieser beiden Gruppen oder die vorstehend beschriebenen kationischen Gruppen (i).

So kann eine so große Säurezahl in das Polyurethanharz (a113) eingebaut werden, daß das neutralisierte Produkt stabil in Wasser zu dispergieren ist. Hierzu dienen Verbindungen, die mindestens eine gegenüber Isocyanatgruppen reaktive Gruppe und mindestens eine zur Anionenbildung befähigte Gruppe (ii) enthalten. Geeignete gegenüber Isocyanatgruppen reaktive Gruppen sind insbesondere Hydroxylgruppen sowie primäre und/oder sekundäre Aminogruppen. Gruppen (ii), die zur Anionenbildung befähigt sind, sind Carboxyl-, Sulfonsäure- und/oder Phosphonsäuregruppen. Vorzugsweise werden Alkansäuren mit zwei Substituenten am alphha-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen (ii) enthaltene Polyol kann 3 bis 100 Gew.-%, vorzugsweise 5 bis 50 Gew.-%, des gesamten Polyolbestandteiles im NCO-Präpolymeren ausmachen.

Die durch die Carboxylgruppenneutralisation in Salzform verfügbare Menge an ionisierbaren Carboxylgruppen (ii) beträgt im allgemeinen wenigstens 0,4 Gew.-%, vorzugsweise wenigstens 0,7 Gew.-%, bezogen auf den Feststoff. Die obere Grenze beträgt etwa 12 Gew.-%. Die Menge an Dihydroxyalkansäuren im unneutralisierten Präpolymer ergibt eine Säurezahl von wenigstens 5 mg KOH/g, vorzugsweise wenigstens 10 mg KOH/g. Bei sehr niedrigen Säurezahlen sind im allgemeinen weitere Maßnahmen zur Erzielung der Wasserdispergierbarkeit erforderlich, etwa durch nichtionische Stabilisierung mit Hilfe der vorstehend beschriebenen funktionellen Gruppen (iii). Die obere Grenze der Säurezahl liegt bei 150 mg KOH/g, vorzugsweise bei 40 mg KOH/g, bezogen auf den Feststoff. Bevorzugt liegt die Säurezahl im Bereich von 20 bis 40 mg KOH/g.

Die Isocyanatgruppen des isocyanatgruppenhaltigen Präpolymers werden mit einem Modifizierungsmittel oder Kettenverlängerungsmittel umgesetzt. Das Modifizierungsmittel wird dabei vorzugsweise in einer solchen Menge zugegeben, daß es zu Kettenverlängerungen und damit zu Molekulargewichtserhöhungen kommt. Als Modifizierungsmittel werden vorzugsweise organische Verbindungen, die Hydroxyl- und/oder sekundäre und/oder primäre Aminogruppen enthalten, insbesondere di-, tri- und/oder höherfunktionelle Polyamine und/oder Polyole, eingesetzt. Als Beispiele für einsetzbare Polyamine werden Ethylendiamin, Trimethylendiamin, Tetramethylendiamin, Pentamethylendiamin, Hexamethylendiamin oder Diethylentriamin genannt. Als Beispiele für einsetzbare Polyole werden Trimethylolpropan, 1,3,4-Butantriol, Glycerin, Erythrit, Mesoerythrit, Arabit, Adonit usw. genannt. Bevorzugt wird Trimethylolpropan eingesetzt.

Die erfindungsgemäß zu verwendenden Polyurethanharze (a113) können mit ethylenisch ungesättigten Verbindungen gepfropft werden. Beispiele geeigneter erfindungsgemäß zu verwendender Polyurethanharze (a113), welche als Pfropfmischpolymerisate vorliegen, sind aus den Patentschriften EP-A-0 424 705, EP-A-0 521 928, EP-A-0 522 420, EP-A-0 522 419 oder EP-A-0 730 613 bekannt.

Zur Herstellung des Polyurethanharzes (a113) wird bevorzugt zunächst ein Isocyanatgruppen aufweisendes Präpolymer hergestellt, aus dem dann durch weitere Umsetzung, bevorzugt Kettenverlängerung, das gewünschte Polyurethanharz (a113) hergestellt wird. Die Umsetzung der Komponenten erfolgt dabei nach den gut bekannten Verfahren der organischen Chemie (vgl. z.B. Kunststoff-Handbuch, Band 7: Polyurethane, herausgegeben von Dr. Y. Oertel, Carl Hanser Verlag, München, Wien 1983). Beispiele für die Herstellung der Präpolymeren sind in der DE-A-26 24 442 und der DE-A-32 10 051 beschrieben. Die Herstellung der Polyurethanharze (a113) kann nach den bekannten Verfahren erfolgen (z.B. Acetonverfahren) oder durch Pfropfmischpolymerisation, wie in den Patentschriften EP-A-0 424 705, EP-A-0 521 928, EP-A-0 522 420, EP-A-0 522 419 oder EP-A-0 730 613 beschrieben.

Die Umsetzung der Komponenten erfolgt bevorzugt inDen üblichen und bekannten organischen Lösemitteln. Die Menge an organischen Lösemitteln kann dabei in weiten Grenzen variieren und sollte zur Bildung einer Präpolymerlösung mit geeigneter Viskosität ausreichen. Im allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10 - 15 Gew.-%, bezogen auf den Festkörper, durchgeführt werden.

Die Umsetzung der Komponenten kann gegebenenfalls in Gegenwart eines Katalysators, wie Organozinnverbindungen und/oder tertiären Aminen, erfolgen.

Zur Herstellung der Präpolymeren werden die Mengen der Komponenten so gewählt, daß das Äquivalentverhältnis von NCO- zu OH-Gruppen zwischen 2,0 : 1,0 und > 1,0 : 1,0, bevorzugt zwischen 1,4 : 1 und 1,1 : 1, liegt.

Das NCO-Präpolymer enthält wenigstens etwa 0,5 Gew.-% Isocyanatgruppen, vorzugsweise wenigstens 1 Gew.-% NCO, bezogen auf den Feststoff. Die obere Grenze liegt bei etwa 15 Gew.-%, vorzugsweise 10 Gew.-%, besonders bevorzugt bei 5 Gew.-% NCO.

Die erfindungsgemäß zu verwendenden wasserlöslichen oder -dispergierbaren, Bindemittel (a11) können einzeln oder als Gemisch vorliegen.

Wenn Sie im Gemisch verwendet werden sollen, ist darauf zu achten, daß keine Bindemittel (11), welche funktionelle Gruppen (i) enthalten, mit Bindemitteln (a11), welche funktionelle Gruppen (ii) enthalten, kombiniert werden, weil dies zur Bildung unlöslicher Polyelektrolytkomplexe führen kann.

Der weitere wesentliche Bestandteile der Basisfarbe (A1) ist mindestens ein Effektpigment und/oder mindestens ein farbgebendes Pigment (a12). Dabei können sowohl die in wäßrigen Beschichtungsmitteln üblichen Pigmente, die mit Wasser nicht reagieren bzw. sich in Wasser nicht lösen, als auch die üblicherweise in konventionellen Beschichtungsmitteln angewandten Pigmente eingesetzt werden. Die Pigmente können aus anorganischen oder organischen Verbindungen bestehen und können effekt- und/oder farbgebend sein. Der erfindungsgemäße Beschichtungsstoff gewährleistet daher aufgrund dieser Vielzahl geeigneter Pigmente eine universelle Einsatzbreite der Beschichtungsstoffe und ermöglicht die Realisierung einer Vielzahl von Farbtönen und optischer Effekte.

Als Effektpigmente (a12) können Metallplättchenpigmente wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden.

Beispiele für geeignete anorganische farbgebende Pigmente sind Titandioxid, Eisenoxide, Sicotransgelb und Ruß.

Beispiele für geeignete organische farbgebende Pigmente sind Indanthrenblau, Cromophthalrot, Irgazinorange und Heliogengrün.

Die Pigmente (a12) können gemeinsam mit geeigneten Füllstoffen (a12) verwendet werden. Es ist indes auch möglich anstelle von Pigmente (a12) geeignete Füllstoffe (a12) zu verwenden, sofern sie über die entsprechende Deckkraft verfügen. Beispiele für geeignete Füllstoffe sind Kreide, Calciumsulfate, Bariumsulfat, Silikate wie Talk oder Kaolin, Kieselsäuren, Oxide wie Aluminiumhydroxid oder Magnesiumhydroxid, Nanopartikel oder organische Füllstoffe wie Textilfasern, Cellulosefasern, Polyethylenfasern oder Holzmehl.

Der weitere wesentliche Bestandteile der Basisfarbe (A1) ist mindestens ein organisches Lösemittel (a13), welches auch wassermischbar sein kann.

Beispiele geeigneter organischer Lösemittel (a13) sind Ester, Ketone wie Aceton oder Methylisobutylketon, Ketoester, Glykoletber wie Ethylen-, Propylen- oder Butylenglykolether, Glykolester wie Ethylen-, Propylen- oder Butylenglykolester oder Glykoletherester wie Ethoxyethylpropionat oder Amide wie N-Methylpyrrolidon oder N,N-Dimethylacetamid.

Weitere Beispiele geeigneter organischer Lösemittel (a13) sind sogenannte Reaktiverdünner, welche an der Reaktion mit den nachstehend beschriebenen Vernetzungsmitteln (a14), (a25) und/oder (b3) teilnehmen können.

Beispiele geeigneter thermisch vernetzbarer Reaktiverdünner (a13) sind verzweigte, cyclische und/oder acyclische C₉-C₁₆-Alkane, die mit mindestens zwei Hydroxylgruppen funktionalisiert sind, vorzugsweise Dialkyloctandiole, insbesondere die stellungsisomeren Diethyloctandiole.

Weitere Beispiele geeigneter thermisch vernetzbarer Reaktiverdünner (a13) sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7-Oxanorbonen; Beispiele geeigneter acyclischer Monoolefine sind in Kohlenwasserstoffgemischen enthalten, die in der Erdölverarbeitung durch Cracken erhalten werden (Cs-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht Mw von 600 bis 1100 auf;

Weitere Beispiele geeigneter thermisch vernetzbarer Reaktiverdünner (a13) sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bis-hydroxymethyl-butandiol-(1,4) (Homopentaerythrit). Die Herstellung dieser Reaktivverdünner kann nach den üblichen und bekannten Methoden der Herstellung hyperverzweigter und dendrimer Verbindungen erfolgen. Geeignete Synthesemethoden werden beispielsweise in den Patentschriften WO 93/17060 oder WO 96/12754 oder in dem Buch von G. R Newkome, C. N. Moorefield und F. Vögtle, "Dendritic Molecules, Concepts, Syntheses, Perspectives", VCH, Weinheim, New York, 1996, beschrieben.

Weitere Beispiele geeigneter Reaktivverdünner (a13) sind Polycarbonatdiole, Polyesterpolyole, Poly(meth)acrylatdiole oder hydroxylgruppenhaltige Polyadditionsprodukte.

Beispiele geeigneter reaktiver Lösemittel (a13) sind Butylglykol, 2-Methoxypropanol, n-Butanol, Methoxybutanol, n-Propanol, Ethylenglykolmonomethylether, Ethylenglykolmonoethylether, Ethylenglykolmonopropylether, Ethylenglykolmonobutylether, Diethylenglykolmonomethylether, Diethylenglykolmonoethyl-ether, Diethylenglykoldiethylether, Diethylenglykolmo-nobutylether, Trimethylolpropan, 2-Hydroxypropionsäureethylester oder 3-Methyl-3-methoxybutanol sowie Derivate auf Basis von Propylenglykol, z.B. Ethoxyethylpropionat, Isopropoxypropanol oder Methoxypropylacetat genannt.

Von den vorstehend genannten Lösemitteln und Reaktiverdünnern (a13) sind die wassermischbare erfindungsgemäß von Vorteil und werden deshalb bevorzugt verwendet.

Die Basisfarbe (A1) kann desweiteren Vernetzungsmittel (a14) enthalten; wesentlich ist, daß die Vernetzungsmittel (a14) die Lagerstabilität der Basisfarbe (A1), etwa durch vorzeitige Vernetzung, nicht nachteilig beeinflussen. Der Fachmann kann deshalb die geeigneten Kombinationen von Vernetzungsmitteln (a14) einerseits und Bindemitteln (a11) andererseits in einfacher Weise auswählen.

Beispiele geeigneter Vernetzungsmittel (a14) sind blockierte Di- und/oder Polyisocyanate.

Beispiele geeigneter Di- und/oder Polyisocyanate für die Herstellung der blockierten Derivate (a14) sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und insbesondere 100 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel die Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

Beispiele für geeignete Polyisocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter Polyisocyanate sind Isocyanurat-, Biuret-, Allophanat-, Iminooxadiazindon-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethylheptan oder 1-Isocyanato-2-(3-isocyanatopropyl)cyclohexan oder Mischungen aus diesen Polyisocyanaten eingesetzt.

Beispiele für geeignete Blockierungsmittel sind die aus der US-Patentschrift US-A-4,444,954 bekannten Blockierungsmittel wie
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolhamstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Ketoxime, Imidazole oder Triazole; sowie

Gemische dieser Blockierungsmittel, insbesondere Dimethylpyrazol und Triazole, Malonester und Acetessigsäureester oder Dimethylpyrazol und Succinimid.

Weitere Beispiele für geeignete Vernetzungsmittel (a14) sind Polyepoxide (a14), insbesondere alle bekannten aliphatischen und/oder cycloaliphatischen und/oder aromatischen Polyepoxide, beispielsweise auf Basis Bisphenol-A oder Bisphenol-F. Als Polyepoxide (a14) geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Als Vernetzungsmittel (a14) können auch Tris(alkoxycarbonylamino)triazine der allgemeinen Formel 5 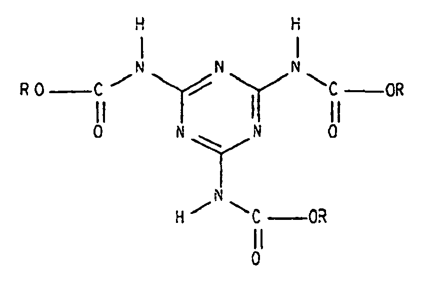 eingesetzt werden.

Beispiele geeigneter Tris(alkoxycarbonylamino)triazine (a14) werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylainino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel (a14) verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. Überdies können die Aminoplastharze auch als Bindemittel (a11) in der Basisfarbe (A1) verwendet werden.

Weitere Beispiele geeigneter Vernetzungsmittel (a14) sind beta-Hydroxyalkylamide wie N,N,N',N'-Tetrakis(2-hydroxyethyl)adipamid oder N,N,N',N'-Tetrakis(2-hydroxypropyl)-adipamid.

Weitere Beispiele geeigneter Vernetzungsmittel (a14) sind Siloxane, insbesondere Siloxane mit mindestens einer Trialkoxy- oder Dialkoxysilangruppe.

Weitere Beispiele geeigneter Vernetzungsmittel (a14) sind Polyanhydride, insbsondere Polysuccinsäureanhydrid.

Die Basisfarbe (A1) kann des weiteren mindestens einen Hilfs- und/oder Zusatzstoff (a15) enthalten, wie sie auf dem Gebiet der Beschichtungsstoffe und Lacke üblich und bekannt sind. Im allgemeinen werden sie vom Fachmann auch als Lackadditive bezeichnet.

Beispiele geeigneter Lackadditive (a15) sind
- UV-Absorber;
- Radikalfänger;
- Katalysatoren für die Vernetzung;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufmittel;
- filmbildende Hilfsmittel wie Cellulose-Derivate;
- Flammschutzmittel oder
- Photoinitiatoren, wie Photoinitiatoren vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen); sowie gegebenenfalls
- die nachstehend beschriebenen rheologiesteuemden Additive.

Weitere Beispiele geeigneter Lackadditive (a15) werden in dem Lehrbuch "Lackadditive" von Johan Bieleman, Wiley-VCH, Weinheim, New York, 1998, beschrieben.

Ferner kann die Basisfarbe (A1) Bestandteile (a16) enthalten, welche mit aktinischer Strahlung, insbesondere UV-Strahlung und/oder Elektronenstrahlung, härtbar sind. Dies bietet den Vorteil, daß die erfindungsgemäßen Beschichtungsstoffe sowohl physikalisch oder thermisch härtbar und zusätzlich noch strahlenhärtbar sind.

Im Rahmen der vorliegenden Erfindung bedeutet der Begriff "physikalische Härtung" die Härtung einer Schicht aus einem Beschichtungsstoff durch Verfilmung gegebenenfalls nach einer Trocknung der Schicht. Üblicherweise sind hierfür keine Vernetzungsmittel notwendig. Gegebenenfalls kann die physikalische Härtung durch Luftsauerstoff oder durch Bestrahlen mit aktinischer Strahlung unterstützt werden.

Im Rahmen der vorliegenden Erfindung bedeutet der Begriff "thermische Härtung" die durch Hitze initiierte Härtung einer Schicht aus einem Beschichtungsstoff, bei der üblicherweise ein separat vorliegendes Vernetzungsmittel angewandt wird. Üblicherweise wird dies von der Fachwelt als Fremdvernetzung bezeichnet. Sind die Vernetzungsmittel in die Bindemittel bereits eingebaut, spricht man auch von Selbstvernetzung.

Im Rahmen der vorliegenden Erfindung ist unter aktinischer Strahlung Elektronenstrahlung oder vorzugsweise UV-Strahlung zu verstehen. Die Härtung durch UV-Strahlung wird üblicherweise durch die vorstehend beschriebenen radikalischen oder kationischen Photoinitiatoren initiiert.

Werden die thermische und die Härtung mit aktinischem Licht bei einem Beschichtungsstoff gemeinsam angewandt, spricht man auch von "Dual Cure".

Als Bestandteile (a16) kommen grundsätzlich alle mit aktinischer Strahlung, insbesondere UV-Strahlung und/oder Elektronenstrahlung, härtbaren niedermolekularen, oligomeren und polymeren Verbindungen in Betracht, wie sie üblicherweise auf dem Gebiet der UV-härtbaren oder mit Elektronenstrahlung härtbaren Beschichtungsmittel verwendet werden. Diese strahlenhärtbaren Beschichtungsmittel enthalten üblicherweise mindestens ein, bevorzugt mehrere strahlenhärtbare Bindemittel, insbesondere auf Basis ethylenisch ungesättigter Präpolymerer und/oder ethylenisch ungesättigter Oligomerer, gegebenenfalls einen oder mehrere Reaktivverdünner sowie gegebenenfalls einen oder mehrere Photoinitiatoren.

Vorteilhafterweise werden die strahlenhärtbaren Bindemittel als Bestandteile (a16) verwendet. Beispiele geeigneter strahlenhärtbarer Bindemittel (a16) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel (a16) eingesetzt; die frei von aromatischen Struktureinheiten sind. Bevorzugt werden daher Urethan(meth)acrylate und/oder Polyester(meth)acrylate, besonders bevorzugt aliphatische Urethanacrylate, eingesetzt.

Weitere Beispiele geeigneter strahlenhärtbarer Bestandteile (a16) sind Reaktivverdünner, insbesondere niedermolekulare polyfunktionelle ethylenisch ungesättigte. Beispiele gut geeigneter Verbindungen dieser Art sind Ester der Acrylsäure mit Polyolen, wie Neopentylglykoldiacrylat, Trimethylolpropantriacrylat, Pentaerythrittriacrylat oder Pentaerythrittetraacrylat; oder Umsetzungsprodukte von Hydroxyalkylacrylaten mit Polyisocyanaten, insbesondere aliphatischen Polyisocyanaten.

Für das erfindungsgemäße Modulsystem ist es von Vorteil, wenn die Basisfarben (A1) nur Effektpigmente oder nur farbgebende Pigmente enthalten. Wie indes vorstehend bereits ausgeführt, muß in dem erfindungsgemäßen Modulsystem stets mindestens eine Basisfarbe (A1) vorliegen, welche mindestens ein farbgebendes Pigment enthält.

Besonders bevorzugte Basisfarben (A1) auf der Basis von Effektpigmenten enthalten
(a12) 0,5 bis 50 Gew.-% mindestens eines Effektpigments,
(a11) 20 bis 80 Gew.-% mindestens eines wasserverdünn-baren oder wasserdispergierbaren Bindemittels und
(a13) 10 bis 79,5 Gew.-% mindestens eines organischen Lösemittels,
wobei die Summe der Gewichtsanteile der Bestandteile (a11) des (a13) jeweils 100 Gew.-% beträgt.

Besonders bevorzugte Basisfarben (A1) auf der Basis anorganischer farbgebender Pigmente (a12) enthalten
(a12) 1 bis 70 Gew.-% mindestens eines anorganischen farbgebenden Pigments,
(a11) 10 bis 80 Gew.-% mindestens eines wasserverdünnbaren oder wasserdispergierbaren Bindemittels und
(a13) 10 bis 89 Gew.-% mindestens eines organischen Lösemittels,
wobei die Summe der Gewichtsanteile der Komponenten (a11) bis (A13) jeweils 100 Gew.-% beträgt

Besonders bevorzugte Basisfarben (A1) auf der Basis organischer farbgebender Pigmente enthalten
(a12) 1 bis 30 Gew.-% mindestens eines organischen farbgebenden Pigments,
(a11) 10 bis 80 Gew.-% mindestens eines wasserverdünnbaren oder wasserdispergierbaren Bindemittels und
(a13) 10 bis 89 Gew.-% mindestens eines organischen Lösemittels,
wobei die Summe der Gewichtsanteile der Komponenten (a11) bis (a13) jeweils 100 Gew.-% beträgt.

Selbstverständlich können auch Basisfarben (A1) eingesetzt werden, die eine Kombination aus mindestens einem organischen farbgebenden und mindestens einem anorganischen farbgebenden Pigment enthalten.

Außerdem kann die Basisfarbe (A1) noch 0 bis 50 Gew.-%, bezogen auf das Gesamtgewicht, Vernetzungsmittel (a14), Lackadditive (a15) und/oder strahlenhärtbare Bestandteile (a16) enthalten.

Methodisch gesehen weist die Herstellung der Basisfarbe (A1) keine Besonderheiten auf, sondern erfolgt nach den üblichen und bekannten Methoden der Herstellung pigmentierter Beschichtungsstoffe.

Der weitere wesentliche Bestandteil des erfindungsgemäßen Modulsystems ist mindestens ein wäßriges Farbmodul (II).

Das wäßrige Farbmodul (II) enthält mindestens eine wäßrige farbgebende Basisfarbe (A2).

Die Basisfarbe (A2) enthält als wesentlichen Bestandteil mindestens ein in Wasser lösliches oder dispergierbares Bindemittel (a21). Als Bindemittel (a21) sind alle vorstehend beschriebenen Bindemittel (a11) geeignet. Erfindungsgemäß ist es von Vorteil, wenn in der Basisfarbe (A2) die gleichen Bindemittel wie in der Basisfarbe (A1) verwendet werden [(a11) = (a21)]. Erfindungsgemäß sind hierbei die vorstehend beschriebenen Polyurethanharze (a113) von besonderem Vorteil und werden deshalb besonders bevorzugt angewandt.

Des weiteren enthält die Basisfarbe (A2) mindestens ein anorganisches farbgebendes Pigment (a22). Beispiele geeigneter anorganischer farbgebender Pigmente (a22) sind die vorstehend beschriebenen farbgebenden Pigmente (a12).

Außerdem enthält die Basisfarbe (A2) als weiteren wesentlichen Bestandteil (a23) Wasser.

Darüber hinaus kann die Basisfarbe (A2) mindestens ein mit Wasser mischbares organisches Lösemittel (a24) enthalten. Beispiele geeigneter Lösemittel (a24) sind die vorstehen beschriebenen Lösemittel (a13). Erfindungsgemäß ist es von Vorteil, wenn in der Basisfarbe (A2) die gleichen Lösemittel verwendet werden wie in der Basisfarbe (a1) [(a13) = (a24)].

Die Basisfarbe (A2) kann außerdem mindestens ein Vernetzungsmitteln (a25) enthalten. Beispiele geeigneter Vernetzungsmittel (a25) sind die vorstehend beschriebenen Vernetzungsmittel (a14). Erfindungsgemäß ist es von Vorteil, wenn in der Basisfarbe (A2) die gleichen Vernetzungsmittel verwendet werden wie in der Basisfarbe (A1) [(a14) = (a25)].

Des weiteren kann die Basisfarbe (A2) mindestens ein Lackadditiv (a26) enthalten. Beispiele geeigneter Lackadditive (a26) sind die vorstehend beschriebenen Lackadditive (a15). Erfindungsgemäß ist es von Vorteil, wenn in der Basisfarbe (A2) die gleichen Lackadditive verwendet werden wie in der Basisfarbe (A1) [(a15) = (a26)].

Nicht zuletzt kann die Basisfarbe (A2) mindestens einen strahlenhärtbaren Bestandteil (a27) enthalten. Beispiele geeigneter strahlenhärtbare Bestandteile (a27) sind die vorstehen beschriebenen strahlenhärtbaren Bestandteile (a16). Erfindungsgemäß ist es von Vorteil, wenn in der Basisfarbe (A2) die gleichen strahlenhärtbaren Bestandteile verwendet werden wie in der Basisfarbe (A1) [(a16) = (a27)].

Selbstverständlich können auch Basisfarben (A2) eingesetzt werden, die eine Kombination aus mindestens einem organischen farbgebenden und mindestens einem anorganischen farbgebenden Pigment enthalten.

Außerdem kann die Basisfarbe (A2) noch 0 bis 50 Gew.-%, bezogen auf das Gesamtgewicht, organische Lösemittel (a24), Vernetzungsmittel (a25), Lackadditive (a26) und/oder strahlenhärtbare Bestandteile (a27) enthalten.

Methodisch gesehen weist die Herstellung der Basisfarbe (A2) ebenfalls keine Besonderheiten auf, sondern erfolgt nach den üblichen und bekannten Methoden der Herstellung pigmentierter Beschichtungsstoffe durch Vermahlen ihrer Bestandteile in geeigneten Mühlen wie Perl-oder Kugelmühlen.

Der dritte wesentliche Bestandteil des erfindungsgemäßen Modulsystems ist mindestens ein wäßriges pigmentfreies Mischlackmodul (III).

Das erfindungsgemäß zu verwendende Mischlackmodul (III) enthält mindestens einen wäßrigen pigmentfreien Mischlack (B).

Der erste wesentliche Bestandteil des Mischlacks (B) ist mindestens ein in Wasser lösliches oder dispergierbares Bindemittel (b1). Beispiele geeigneter Bindemittel (b1) sind die vorstehend im Detail beschriebenen Bindemittel (a11). Erfindungsgemäß ist es von Vorteil, wenn in dem Mischlack (B) die gleiche Bindemittel verwendet werden, wie in der Basisfarbe (A1) und/oder (A2) [(b1) = (a11) und/oder (a21)].

Der weitere wesentliche Bestandteil (b2) des Mischlacks (B) ist Wasser.

Darüber hinaus kann der Mischlack (B) mindestens ein Vernetzungsmittel (b3) enthalten. Beispiele geeigneter Vernetzungsmittel (b3) sind die vorstehend beschriebenen Vernetzungsmittel (a14) und/oder (a25). Erfindungsgemäß ist es von Vorteil, wenn im Mischlack (B) die gleichen Vernetzungsmittel verwendet werden wie in der Basisfarbe (A1) und/oder der Basisfarbe (A2) [(b3) = (a14) und/oder (a25)].

Des weiteren kann der Mischlack (B) mindestens ein Lackadditiv (b4) enthalten. Beispiele geeigneter Lackadditive (b4) sind die vorstehend beschriebenen Lackadditive (a15) und/oder (a26). Erfindungsgemäß ist es von Vorteil, wenn in die gleichen Lackadditive verwendet werden wie in der Basisfarbe (A1) und/oder der Basisfarbe (A2) [(b4) = (a15) und/oder (a26)].

Des weiteren kann der Mischlack (B) mindestens einen strahlenhärtbaren Bestandteil (b5) enthalten. Beispiele geeigneter strahlenhärtbare Bestandteile (b5) sind die vorstehend beschriebenen strahlenhärtbaren Bestandteile (a16) und/oder (a27). Erfindungsgemäß ist es von Vorteil, wenn inden Mischlack (B) die gleichen strahlenhärtbaren Bestandteile verwendet werden wie in der Basisfarbe (A1) und/oder der Basisfarbe (A2) [(b5) =(a16) und/oder (a27)].

Nicht zuletzt kann der Mischlack (B) mindestens ein mit Wasser mischbares organisches Lösemittel (b6) in untergeordneten Mengen enthalten. In Rahmen der vorliegenden Erfindung bedeutet der Passus "untergeordnete Menge", daß in dem Mischlack (B) nur so viele organische Lösemittel (b6) enthalten sind, daß die wäßrige Natur des Mischlacks (B) nicht verlorengeht.

Beispiele geeigneter Lösemittel (b6) sind die vorstehend im Detail beschriebenen Lösemittel (a13) und/oder (a24). Erfindungsgemäß ist es von Vorteil, wenn in dem Mischlack (B) die gleichen Lösemittel (b6) verwendet werden wie in den Basisfarben (A1) und/oder (A2) [(b6) = (a13) und/oder (a24)]. Außerdem kann der Mischlack (B) noch 0 bis 50 Gew.-%, bezogen auf das Gesamtgewicht, organische Lösemittel (b6), Vernetzungsmittel (b3), Lackadditive (b4) und/oder strahlenhärtbare Bestandteile (b5) enthalten.

Methodisch gesehen weist die Herstellung des Mischlacks (B) keine Besonderheiten auf, sondern erfolgt nach den üblichen und bekannten Methoden der Herstellung von Lacken mit Hilfe üblicher und bekannter Mischaggregate wie Rührkessel oder Dissolver.

Als vierter Bestandteil des erfindungsgemäßen Modulsystems wird mindestens ein pigmentfreies Rheologiemodul (IV) verwendet.

Der erste wesentliche Bestandteil des Rheologiemoduls (IV) ist ein wäßriges Medium (C).

Das wäßrige Medium (C) besteht im wesentlichen aus Wasser. Hierbei kann das wäßrige Medium (C) in untergeordneten Mengen die vorstehend in Detail beschriebenen Bestandteile der Basisfarben (A1) und/oder (A2), ausgenommen die Pigmente (a12) und (a22), sowie des Mischlacks (B) und/oder sonstige feste, flüssige oder gasförmige organische und/oder anorganische, nieder- und/oder hochmolekulare Stoffe molekular dispers gelöst oder dispergiert enthalten. Im Rahmen der vorliegenden Erfindung ist unter dem Begriff "untergeordnete Menge" eine Menge zu verstehen, welche den wäßrigen Charakter des wäßrigen Mediums (C) nicht aufhebt.

Das wäßrige Medium (C) enthält erfindungsgemäß mindestens ein die Rheologie steuerndes Additiv (c1). Beispiele geeigneter rheologiesteuemder Additive (c1) sind die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate. Bevorzugt werden als rheologiesteuernde Additive Schichtsilikate eingesetzt.

Wie vorstehend bereits ausgeführt, können diese rheologiesteuernden Additive (c1) auch als Lackadditive (a15) in der Basisfarbe (A1), als Lackadditive (a26) in der Basisfarbe (A2) und/oder als Lackadditiv (b4) in dem Mischlack (B), insbesondere aber als Lackadditiv (b4) in dem Mischlack (B), vorliegen. Erfindungsgemäß ist es indes von Vorteil, wenn die rheologiesteuemde Additive (c1) im wesentlichen oder ausschließlich im pigmentfreien Rheologiemodul (IV) vorliegen.

Vorteilhafterweise sind in dem pigmentfreien Rheologiemodul (IV) das wäßrige Medium (C) in einer Menge 70 bis 99 Gew.-% und insbesondere 75 bis 98,5 Gew.-% und das die Rheologie steuernde Additiv (c1) in einer Menge von 1,0 bis 30 Gew.-% und insbesondere 1,5 bis 25 Gew.-%, jeweils bezogen auf die Gesamtmenge des Rheologiemoduls (IV), enthalten.

Methodisch gesehen weist die Herstellung des Rheologiemoduls (IV) keine Besonderheiten auf, sondern erfolgt nach den üblichen und bekannten Methoden der Herstellung von Lacken mit Hilfe üblicher und bekannter Mischaggregate wie Rührkessel oder Dissolver.

Die verschiedenen Basisfarben (A1) des farb-und/oder effektgebende Moduls (1), die verschiedenen Basisfarben (A 2) des farbgebenden Moduls (II), der Mischlack (B) des Mischlackmodul (III) sowie der Rheologiemodul (IV) werden zur Herstellung der erfindungsgemäßen Beschichtungsstoffe in einem solchen Verhältnis gemischt, daß nach ihrer Applikation erfindungsgemäße Lackierungen mit dem jeweils gewünschten Farbton und/oder dem jeweils gewünschten optischen Effekt resultieren. Das Mischungsverhältnis der vorstehend genannten Bestandteile wird durch die Forderung bestimmt, daß der resultierende Beschichtungsstoff unabhängig von seinem Farbton die gewünschte Viskosität, den gewünschten Festkörpergehalt und den gewünschten Gehalt an organischen Lösemitteln usw. aufweist.

Der Festkörpergehalt (Menge an eingesetzten Bindemitteln (a11), (a21) und (b1) plus die Menge an eingesetzten Pigment (a12) und (a22)] sowie der Gehalt an organischen Lösemitteln usw. variiert mit den Verwendungszweck der erfindungsgemäßen Beschichtungsstoffe.

Für deren Verwendung für die Autoreparaturlackierung liegt der Festkörpergehalt für Metallic-Effektlacke vorzugsweise bei 7 bis 25 Gew.-% und für Unidecklacke vorzugsweise bei 10 bis 45 Gew.-%, jeweils bezogen auf das Gesamtgewicht des erfindungsgemäßen Beschichtungsstoffs.

Eine bevorzugte Ausführungsform des erfindungsgemäßen Modulsystems ist ein Mischsystem, bei dem alle Basisfarben (A1) und (A2) und der Mischlack (B) das gleiche bzw. im Falle einer Bindemittelmischung die gleichen Bindemittel enthalten. Dies gewährleistet, daß - unabhängig vom Mischungsverhältnis der verschiedenen Basisfarben (A1) und (A2) sowie des Mischlacks (B) und damit unabhängig vom Farbton und/oder vom optischen Effekt - die resultierenden Mischungen der verschiedenen Basisfarben (A1) und (A2) und des Mischlacks (B) ein etwa gleichbleibendes Abdunstverhalten (Trocknung) sowie eine ähnliche Rheologie zeigen. Dies gewährleistet außerdem, daß beim Einsatz von verschiedenen Basisfarben (A1) und (A2) und Mischlack (B) unabhängig vom jeweils gewünschten Farbton konstante Filmeigenschaften erzielt werden.

Wird in den Basisfarben (A1) und (A2) und im Mischlack (B) jeweils eine Mischung verschiedener Bindemittel eingesetzt, so sollte auch das Mischungsverhältnis der verschiedenen Bindemittel untereinander in den einzelnen Basisfarben (A1) und (A2) und im Mischlack (B) bevorzugt jeweils konstant sein, um so nach Mischung mit den übrigen Bestandteilen des erfindungsgemäßen Modulsystems wiederum konstante Mischungsverhältnisse hinsichtlich der Bindemittel unabhängig vom Farbton zu erzielen. Wird im Rheologiemodul (IV) eine Mischung der Bindemittel eingesetzt, die auch in in den einzelnen Basisfarben (A1) und (A2) und im Mischlack (B) verwendet werden, so sollte auch in dem Rheologiemodul (IV) das Mischungsverhältnis der verschiedenen Bindemittel untereinander bevorzugt gleich dem Mischungsverhältnis dieser Bindemittel in den einzelnen Basisfarben (A1) und (A2) und im Mischlack (B) sein.

Besonders bevorzugte erfindungsgemäße Modulsysteme werden erhalten, wenn die einzelnen Basisfarben (A1) und (A2) und der Mischlack (B) sowie der Rheologiemodul (IV) als Bindemittel wasserverdünnbare Polyurethanharze (a113) enthalten.

Das mit Hilfe des erfindungsgemäßen Modulsystems hergestellte erfindungsgemäße Beschichtungsmittel ist physikalisch härtbar, thermisch härtbar, physikalisch und mit aktinischer Strahlung härtbar sowie thermisch und mit aktinischer Strahlung härtbar. Erfindungsgemäß ist die physikalische Härtung von Vorteil, insbesondere wenn das erfindungsgemäße Beschichtungsmittel für die Autoreparaturlackierung oder die Kunststofflackierung angewendet werden soll.

Die unter Verwendung des erfindungsgemäßen Modulsystems hergestellten erfindungsgemäßen Beschichtungsstoffe können auf die verschiedensten Substrate, wie z. B. Metall, Holz, Glas, Kunststoff oder Papier aufgebracht werden. Insbesondere eignen sich die mittels des erfindungsgemäßen Modul- oder Mischsystems hergestellten wäßrigen Überzugsmittel für die Reparaturlackierung von Schadstellen, insbesondere für die Autoreparaturlackierung. Die erfindungsgemäßen Beschichtungsmittel werden in diesem Fall direkt nach ihrer Herstellung durch Mischen ihrer Bestandteile auf die entsprechend vorbereitete Schadstelle (z. B. durch Spachteln und Füllern) mittels üblicher Methoden, insbesondere Spritzen, appliziert. Bevorzugt werden die unter Verwendung des erfindungsgemäßen Mischsystems hergestellten wäßrigen Beschichtungsstoffe zur Erzeugung einer Basislackschicht oder einer Unidecklackschicht, insbesondere aber einer Basislackschicht, eingesetzt.

Nach Antrocknung der so hergestellten Basislackschicht bei Raumtemperatur oder durch forcierte Trocknung (z.B. 10 min. bei 60°C, 80 °C oder IR-Trocknung) wird zu Zwecken der Herstellung einer farb- und/oder effektgebende Mehrschichtlackierung eine geeignete Klarlackschicht naß-in-naß aufgebracht.

Beschichtungsstoffe, welche der Herstellung von Klarlackscbichten nach dem Naß-in-naß-Verfahren dienen, sind üblich und bekannt.

Hierbei kommen als Beschichtungsstoffe oder Klarlacke Einkomponenten(1K)-, Zweikomponenten(2K)- oder Mehrkomponenten(3K, 4K)-Klarlacke, Pulverklarlacke, Pulverslurry-Klarlacke und mit aktinischer Strahlung härtbare Klarlacke in Betracht.

Beispiele geeigneter Einkomponenten(1K)-, Zweikomponenten(2K)- oder Mehrkomponenten(3K, 4K)-Klarlacke sind beispielsweise aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten beispielsweise hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamatund/oder Allophanatgruppen und carbamat- und/oder allophanatmodifizerten Aminoplastharzen.

Zweikomponenten(2K)- oder Mehrkomponenten(3K, 4K)-Klarlacke enthalten als wesentliche Bestandteile beispielsweise hydroxylgruppenhaltige Bindemittel und Polyisocyanate als Vernetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile beispielsweise epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert.

UV-härtbare Klarlacke gehen beispielsweise aus den Patentschriften EP-A-0 540 884, EP-A-0 568 967 oder US-A-4,675,234 hervor.

Sie enthalten bekanntermaßen mit aktinischem Licht und/oder Elektronenstrahlung härtbare niedermolekulare, oligomere und/oder polymere Verbindungen, vorzugsweise strahlenhärtbare Bindemittel, insbesondere auf Basis ethylenisch ungesättigter Präpolymerer und/oder ethylenisch ungesättigter Oligomerer, gegebenenfalls einen oder mehrere Reaktivverdünner sowie gegebenenfalls einen oder mehrere Photoinitiatoren. Beispiele geeigneter strahlenhärtbarer Bindemittel sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel eingesetzt, die frei von aromatischen Struktureinheiten sind.

Es können indes auch mehrschichtige Klarlackschichten angewandt werden wie etwa eine Klarlackschicht auf der Basis von hydroxylgruppenhaltigen Bindemitteln und blockierten Polyisocyanaten und Aminoplasten als Vernetzungsmittel, die der Wasserbasislackschicht unmittelbar aufliegt und über der sich eine weitere Klarlackschicht beispielsweise auf der Basis von carbamat- und/oder allophanatgruppenhaltigen Bindemitteln und Aminoplasten als Vernetzungsmittel befindet.

Bei Verwendung von Zweikomponenten(2K)- oder Mehrkomponenten(3K, 4K)-Klarlacken erfolgt die Trocknung vorzugsweise bei Temperaturen von unter 100 °C, bevorzugt von unter 80 °C. Es können auch höhere Temperaturen angewandt werden, wenn es in Einzelfall erforderlich und/oder vorteilhaft ist. Die Trockenfilmschichtdicken der Basislackschicht liegen insbesondere zwischen 5 und 25 µm, die der Klarlackschicht i.a. zwischen 30 und 70 µm.

Bei Verwendung von Einkomponenten(1K)-Klarlacken, Pulverklarlacken und Pulverslurry-Klarlacken wird die Basislackschicht zusammen mit der Deckschicht bei erhöhten Temperaturen, z.B. ca. 120°C, getrocknet. Die Trockenfilmschichtdicken der Klarlackschicht liegen hier insbesondere zwischen 30 und 50 µm.

In dieser Weise resultieren ein- oder mehrschichtige erfindungsgemäße Lackierungen mit besonders hohe Deckkraft.

### Beispiele und Vergleichsversuche

### Herstellbeispiel 1

### Herstellung einer Polyurethanharzdispersion 1

In einem geeigneten Reaktionsgefäß, ausgestattet mit Rührer, Rückflußkühler und Zulaufgefäß, wurden unter Schutzgas 130,8 Gewichtsteile eines Polyesters mit einem zahlenmittleren Molekulargewicht Mn von 1.400 auf Basis einer handelsüblichen ungesättigten Dimerfettsäure mit einer Iodzahl von 10 mg I₂/g, einen Monomerengehalt von max. 0,1 Gew.-%, einem Trimerengehalt von max. 2 Gew.-%, mit einer Säurezahl von 195 bis 200 mg KOH/g und einer Verseifungszahl von 197 bis 202 mg KOH/g, Isophthalsäure und Hexandiol vorgelegt und nacheinander mit 11,7 Gewichtsteilen Dimethylolpropionsäure, 2,4 Gewichtsteilen Neopentylglykol, 103,4 Gewichtsteilen Methylethylketon und 63,1 Gewichtsteilen 4,4'- Di-(isocyanatocyclohexyl)methan versetzt. Die resultierende Reaktionsmischung wurde so lange am Rückfluß erhitzt, bis ein konstanter Isocyanatgehalt erreicht war. Anschließend wurden zu dem Reaktionsgemisch 6,1 Gewichtsteile Trimethylolpropan hinzugegeben, und es wurde bis zu einer Viskosität von 12 dPas (50 %ige Lösung in N-Methylpyrrolidon) weiter unter Rückfluß erhitzt. Durch Zugabe von 3,4 Gewichtsteilen n-Butanol wurden eventuell noch vorhandene freie Isocyanatgruppen blockiert. Anschließend wurden dem resultierenden Reaktionsgemisch nacheinander 6,1 Gewichtsteile Dimethylethanolamin, 42,8 Gewichtsteile eines Polypropylenglykols mit einem zahlenmittleren Molekulargewicht Mn von 900 und 533,7 Gewichtsteile entionisiertes Wasser zugesetzt. Nach dem Entfernen des Methylethylketons mittels Vakuumdestillation erhielt man eine Polyurethanharzdispersion, die mit entionisiertem Wasser auf einen Feststoffgehalt von 30 Gew.-% eingestellt wurde. Die resultierende Polyurethanharzdispersion 1 wies einen pH-Wert 7,7 auf.

Die Polyurethanharzdispersion 1 diente der Herstellung des pigmentfreien Mischlacks (B) und als Anreibeharz für die wäßrige farbgebende Basisfarbe (A2).

### Herstellbeispiel 2

### Herstellung eines Polyurethanharzes 2

In einem geeigneten Reaktionsgefäß, ausgestattet mit Rührer, Rückflußkühler und Zulaufgefäß, wurden unter Schutzgas 214,7 Gewichtsteile des im Herstellbeispiel 1 näher beschriebenen Polyesters vorgelegt und nacheinander mit 19,2 Gewichtsteilen Dimethylolpropionsäure, 4,0 Gewichtsteilen Neopentylglykol, 169,7 Gewichtsteilen Methylethylketon und 103,6 Gewichtsteilen 4,4'-Di-(isocyanatocyclohexyl)methan versetzt. Die resultierende Mischung wurde so lange am Rückfluß erhitzt, bis ein konstanter Isocyanatgehalt erreicht war. Anschließend wurden dem Reaktionsgemisch 10 Gewichtsteile Trimethylolpropan zugesetzt, und es wurde bis zu einer Viskosität von 10 dPas (50%ige Lösung in N-Methylpyrrolidon) weiter am Rückfluß erhitzt. Danach wurden 452,4 Gewichtsteile Butylglykol zu geben. Nach dem Entfernen des Methylethylketons mittels Vakuumdestillation wurde die Harzlösung mit 11,7 Gewichtsteilen Dimethylethanolamin neutralisiert und mit Butylglykol auf eine Feststoffgehalt von 44 Gew.-% eingestellt.

Das Polyurethanharz 2 diente als Bindemittel der Herstellung der farb- und effektgebenden Basisfarbe (A1).

### Herstellbeispiel 3

### Herstellung eines Polyurethanharzes 3

In einem geeigneten Reaktionsgefäß, ausgestattet mit Rührer, Rückflußkühler und Zulaufgefäß, wurden unter Schutzgas 280,2 Gewichtsteile eines Polyesters mit einem zahlenmittleren Molekulargewichte Mn von 1.350 auf Basis einer handelsüblichen ungesättigten Dimerfettsäure mit einer Iodzahl von 10 mg I₂/g, mit einem Monomerengehalt von max. 0,1 Gew.-%, einem Trimerengehalt von max. 2 Gew.-%, einer Säurezahl von 195 bis 200 mg KOH/g und einer Verseifungszahl von 197 bis 202 mg KOH/g, Isophthalsäure, Neopentylglykol und Hexandiol vorgelegt und nacheinander mit 24,4 Gewichtsteilen Dimethylolpropionsäure, 4,0 Gewichtsteilen Neopentylglykol, 218,4 Gewichtsteilen Methylethylketon und 123,1 Gewichtsteilen Tetramethylxylylidendiisocyanat versetzt. Die resultierende Reaktionsmischung wurde solange am Rückfluß erhitzt, bis ein konstanter Isocyanatgehalt erreicht war. Anschließend wurden zu dem Gemisch 18,5 Gewichtsteile Trimethylolpropan hinzugegeben, und es wurde bis zu einer Viskosität von 4,0 dPas (10 Gewichtsteile Reaktionsmischung in 6 Gewichtsteilen N-Methylpyrrolidon) am Rückfluß erhitzt. Danach wurden 276,9 Gewichtsteile Butylglykol zugegeben. Nach dem Entfernen des Methylethylketons mittels Vakuumdestillation wurde die Harzlösung mit 13,0 Gewichtsteilen Dimethylethanolamin in 30 Gewichtsteile Butylglykol neutralisiert und anschließend mit Butylglykol auf einen Feststoffgehalt von 60 Gew.-% eingestellt.

Das Polyurethanharz 3 diente der Herstellung einer wasserfreien farbgebenden Basisfarbe (A1).

### Herstellbeispiel 4

### Herstellung des pigmentfreien Mischlacks (B)

527 Gewichtsteile der Polyurethanharzdispersion 1 gemäß Herstellbeispiel 1 wurden mit 362,5 Gewichtsteilen entionisiertem Wasser und 0,25 Gewichtsteilen eines handelsüblichen Verdickers auf der Basis von Polyurethan versetzt. Es resultierte der pigmentfreie Mischlack (B).

### Herstellbeispiel 5

### Herstellung des Rheologiemoduls (IV)

Zu 32,5 Gewichtsteilen einer vorgequollenen wäßrigen Paste, enthaltend 1,5 Gewichtsteile eines anorganischen Natrium-Magnesium-Schichtsilikat-Verdickungsmittels und 1 Gewichtsteil Polypropylenglykol mit einem zahlenmittleren Molekulargewicht von 900, wurden 67,5 Gewichtsteile entionisiertes Wasser unter Rühren zugesetzt. Es resultierte das Rheologiemodul (IV).

### Herstellbeispiels 6 (Beispiel nicht gemäß der Erfindung)

### Herstellung einer grünpigmentierten wäßrigen Basisfarbe (A2)

20 Gewichtsteile Heliogengrün wurden mit 72 Gewichtsteilen der Polyurethanharzdispersion 1 gemäß Herstellbeispiel 1, 4 Gewichtsteilen Butylglykol und 4 Gewichtsteilen eines handelsüblichen Dispergierhilfsmittels auf der Basis eines hochmolekularen Blockmischpolymerisats unter Rühren vermischt und mit einer Perlmühle dispergiert. Es resultierte die wäßrige Basisfarbe (A2). Hierbei wurde der Grad der Pigmentierung durch das gewünschte Fließverhalten und die gewünschte Rheologie bestimmt.

### Herstellbeispiel 7 (Vergleichsversuch)

### Herstellung einer grünpigmentierten wasserfreien Basisfarbe (A1)

14 Gewichtsteile Heliogengrün wurde mit 44,8 Gewichtsteilen der Polyurethanharzlösung 3 gemäß Herstellbeispiel 3, 20,7 Gewichtsteile Butylglykol, 16,4 Gewichtsteilen sek.-Butanol und 3,8 Gewichtsteilen eines handelsüblichen Netzmittels unter Rühren vermischt und mit einer Perlmühle dispergiert. Es resultierte die wasserfreie Basisfarbe (A1). Auch hierbei wurde der Grad Pigmentierung durch das gewünschte Fließverhalten und die gewünschte Rheologie bestimmt.

### Herstellbeispiel 8

### Herstellung einer wasserfreien farb- und effektgebenden Basisfarbe (A1)

25 Gewichtsteile eines blauen Perleffektpigments wurden mit 14,3 Gewichtsteilen der Polyurethanharzlösung 2 gemäß Herstellbeispiel 2, 14,3 Gewichtsteilen sek.-Butanol, 3,3 Gewichtsteilen Butylglykol, 3,3 Gewichtsteilen eines handelsüblichen Netzmittels und 2,0 Gewichtsteilen einer pyrogenen Kieselsäure vermischt und während zehn Minuten in einem Dissolver homogenisiert. Dem resultierenden Gemisch wurden 37,5 Gewichtsteile der Polyurethanharzlösung 2 zugesetzt, wodurch die Basisfarbe (A1) resultierte.

### Beispiele und Vergleichsversuch

### Herstellung eines erfindungsgemäßen und eines nicht erfindungsgemäßen Beschichtungsstoffs sowie erfindungsgemäßer und nicht erfindungsgemäßer Mehrschichtlackierungen

Die Beschichtungsstoffe wurden durch Vermischen ihrer Bestandteile hergestellt.
Die Tabelle gibt einen Überblick über die jeweils verwendete Zusammensetzung.
Die Viskosität betrug jeweils etwa 18 s im DIN-4-Becher bei 20 °C.

**Tabelle:**

| **Die Zusammensetzung des erfindungsgemäßen Beschichtungsstoffs (Beispiel) und des nicht erfindungsgemäßen Beschichtungsstoffs (Vergleichsversuch)** | | |
|---|---|---|
| | **Beispiel** | **Vergleichsversuch** |
| **Bestandteil:** | | |
| | | |
| Mischlack (B) gemäß Herstellbeispiel 4 (g) | 13,1 | 42,6 |
| | | |
| Wässrige Basisfarbe (A2) gemäß Herstellbeispiels 6 (g) | 26,3 | - |
| | | |
| Wasserfreie Basisfarbe (A1) gemäß Herstellbeispiel 7 (g) | - | 13,8 |
| | | |
| Wasserfreie Basisfarbe (A1) gemäß Herstellbeispiels 8 (g) | 11,0 | 4,0 |
| | | |
| Rheologiemodul (IV) gemäß Herstellbeispiel 5 (g) | 49,6 | 39,6 |
| | | |

| **Eigenschaften:** | | |
|---|---|---|
| | | |
| Pigmentgehalt (%) | 8,0 | 2,9 |
| | | |
| Deckkraft (µm) | 10 | 20 |

Der Vergleich des Beispiels mit den Vergleichsversuch zeigt, daß der erfindungsgemäße Beschichtungsstoff mit einem höheren Pigmentgehalt ausgestattet werden konnte als der nicht erfindungsgemäße.

Für die Herstellung der Mehrschichtlackierungen wurden phosphatierte Stahlbleche, welche mit einer Elektrotauchlackierung auf der Basis eines handelsüblichen Elektrotauchlacks und mit einer Füllerschicht auf der Basis eines handelsüblichen wäßrigen Füllers versehen worden waren, wurde mit dem Beschichtungsstoff gemäß dem Beispiel und mit dem Beschichtungsstoff gemäß den Vergleichsversuch beschichtet. Nach einer Ablüftzeit von jeweils 30 Minuten bei Raumtemperatur wurden die Naßschichten mit einem handelsüblichen konventionellen Zweikomponenten-Klarlack auf Basis eines hydroxylgruppenhaltigen Acrylatcopolymerisats als Bindemittel und eines Polyisocyanats als Vernetzer überschichtet und während 30 Minuten bei 60 °C getrocknet.

Es resultierten Mehrschichtlackierungen mit einer Basislackschicht einer Stärke von 12 bis 15 µm und einer Klarlackschicht einer Stärke von 40 bis 45 µm. Hierbei war die erfindungsgemäße Mehrschichtlackierung in ihrem optischen Gesamteindruck der nicht erfindungsgemäßen klar überlegen.

Die Deckkraft der Basislackschichten wurde durch die Applikation des erfindungsgemäßen und des nicht erfindungsgemäßen Beschichtungsstoffs auf einen Schwarz/Weiß-Kontrast bestimmt, indem die Trockenfilmschichtdicke gemessen wurde, bei der die vollständige Abdeckung des Kontraste erfolgte. Wie der Vergleich der Werte in der Tabelle zeigt, war die erfindungsgemäße Basislackschicht der nicht erfindungsgemäßen auch in dieser Hinsicht eindeutig überlegen.

## Patentansprüche

1. Modulsystem für die Herstellung wässriger Beschichtungsstoffe, mindestens enthaltend
(I) mindestens ein im wesentlichen wasserfreies Farb- und/oder Effektmodul, enthaltend
(A1) mindestens eine im wesentlichen wasserfreie farbund/oder effektgebende Basisfarbe, enthaltend
(a11) 10 bis 80 Gew.-% mindestens ein wasserverdünnbares oder wasserdispergierbares Bindemittel,
(a12) 0,5 bis 70 Gew.-% mindestens ein Effektpigment und/oder mindestens ein farbgebendes Pigment und
(a13) 10 bis 89,5 Gew.-% mindestens ein organisches Lösemittel sowie gegebenenfalls enthaltend
(a14) mindestens ein Vernetzungsmittel und/oder
(a15) mindestens einen Hilfs- und/oder Zusatzstoff (Lackadditiv),
wobei die Summe der Gewichtsteile der Komponenten (a11) bis (a13) jeweils 100 Gew.-% beträgt;
(II) mindestens ein wässriges Farbmodul, enthaltend
(A2) mindestens eine wässrige farbgebende Basisfarbe, enthaltend
(a21) 10 bis 80 Gew.-% mindestens ein wasserverdünnbares oder wasserdispergierbares Bindemittel,
(a22) 1 bis 70 Gew.-% mindestens ein anorganisches farbgebendes Pigment
(a23) 89 bis 20 Gew.-% Wasser und
(a24) 0 bis 20 Gew.-% mindestens ein organisches Lösemittel sowie gegebenenfalls enthaltend
(a25) mindestens ein Vernetzungsmittel und/oder
(a26) mindestens einen Hilfs- und/oder Zusatzstoff (Lackadditiv),
wobei die Summe der Gewichtsteile der Komponenten (a21) bis (a24) jeweils 100 Gew.-% beträgt; und
(III) mindestens ein wässriges pigmentfreies Mischlackmodul, enthaltend
(B) mindestens einen pigmentfreien Mischlack, enthaltend
(b1) 10 bis 80 Gew.-% mindestens ein in Wasser lösliches oder dispergierbares Bindemittel und
(b2) 20 bis 90 Gew.-% Wasser sowie gegebenenfalls enthaltend
(b3) mindestens ein Vernetzungsmittel und/oder
(b4) mindestens einen Hilfs- und/oder Zusatzstoff (Lackadditiv),
wobei die Summe der Gewichtsanteile der Bestandteile (b1) und (b2) jeweils 100 Gew.-% beträgt; sowie enthaltend
(IV) mindestens ein pigmentfreies Rheologiemodul; enthaltend
(C) 50 bis 99,5 Gew.-%, bezogen auf die Gesamtmenge des Rheologiemoduls (IV), ein wässriges Medium, enthaltend
(c1) 0,5 bis 50 Gew.-%, bezogen auf die Gesamtmenge des Rheologiemoduls (IV), mindestens ein die Rheologie steuerndes Additiv;
mit der Maßgabe, dass es sich bei den Lackadditiven (a15), (a26) und/oder (b4) auch um mindestens ein die Rheologie steuerndes Additiv (c1) handeln kann, **dadurch gekennzeichnet, dass** die Bindemittel (a11), (a21) und (b1) Polyurethanharze sind.

2. Verfahren zur Herstellung eines wässrigen Beschichtungsstoffs mit genau festgelegter Tönung und optischem Effekt durch mit Vermischen getrennt voneinander gelagerter Module unterschiedlicher stofflicher Zusammensetzung und Funktion kurz vor der Applikation des Beschichtungsstoffs, **dadurch gekennzeichnet, dass** man hierbei mindestens
(I) mindestens ein im wesentlichen wasserfreies Farb- und/oder Effektmodul, enthaltend
(A1) mindestens eine im wesentlichen wasserfreie farbund/oder effektgebende Basisfarbe, enthaltend
(a11) 10 bis 80 Gew.-% mindestens ein wasserverdünnbares oder wasserdispergierbares Bindemittel,
(a12) 0,5 bis 70 Gew.-% mindestens ein Effektpigment und/oder mindestens ein farbgebendes Pigment und
(a13) 10 bis 89,5 Gew.-% mindestens ein organisches Lösemittel sowie gegebenenfalls enthaltend
(a14) mindestens ein Vernetzungsmittel und/oder
(a15) mindestens einen Hilfs- und/oder Zusatzstoff (Lackadditiv),
wobei die Summe der Gewichtsteile der Komponenten (a11) bis (a13) jeweils 100 Gew.-% beträgt;
(II) mindestens ein wässriges Farbmodul, enthaltend
(A2) mindestens eine wässrige farbgebende Basisfarbe, enthaltend
(a21) 10 bis 80 Gew.-% mindestens ein wasserverdünnbares oder wasserdispergierbares Bindemittel,
(a22) 1 bis 70 Gew.-% mindestens ein anorganisches farbgebendes Pigment,
(a23) 89 bis 20 Gew.-% Wasser und
(a24) 0 bis 20 Gew.-% mindestens ein organisches Lösemittel sowie gegebenenfalls enthaltend
(a25) mindestens ein Vernetzungsmittel und/oder
(a26) mindestens einen Hilfs- und/oder Zusatzstoff (Lackadditiv),
wobei die Summe der Gewichtsteile der Komponenten (a21) bis (a24) jeweils 100 Gew.-% beträgt; und
(III) mindestens ein wässriges pigmentfreies Mischlackmodul, enthaltend
(B) mindestens einen pigmentfreien Mischlack, enthaltend
(b1) 10 bis 80 Gew.-% mindestens ein in Wasser lösliches oder dispergierbares Bindemittel und
(b2) 20 bis 90 Gew.-% Wasser sowie gegebenenfalls enthaltend
(b3) mindestens ein Vernetzungsmittel und/oder
(b4) mindestens einen Hilfs- und/oder Zusatzstoff (Lackadditiv),
wobei die Summe der Gewichtsanteile der Bestandteile (b1) und (b2) jeweils 100 Gew.-% beträgt; sowie enthaltend
(IV) mindestens ein pigmentfreies Rheologiemodul; enthaltend
(C) 50 bis 99,5 Gew.-%, bezogen auf die Gesamtmenge des Rheologiemoduls (IV), ein wässriges Medium, enthaltend
(c1) 0,5 bis 50 Gew.-%, bezogen auf die Gesamtmenge des Rheologiemoduls (IV), mindestens ein die Rheologie steuerndes Additiv;
mit der Maßgabe, dass es sich bei den Lackadditiven (a15), (a26) und/oder (b4) auch um mindestens ein die Rheologie steuerndes Additiv (c1) handeln kann, **dadurch gekennzeichnet, dass** die Bindemittel (a11), (a21) und (b1) Polyurethanharze sind.

3. Das Modulsystem nach Anspruch 1 und das Verfahren nach Anspruch 2, **dadurch gekennzeichnet, dass** die Basisfarbe (A1) effektgebend oder farb- und effektgebend ist.

4. Das Modulsystem nach Anspruch 1 oder 3 und das Verfahren nach Anspruch 2 oder 3, **dadurch gekennzeichnet, dass** das Modulsystem
1. mindestens ein im wesentlichen wasserfreies Farbmodul (I), mindestens ein wässriges Farbmodul (II) und mindestens ein wässriges pigmentfreies Mischlackmodul (III) oder
2. mindestens ein im wesentlichen wasserfreies Farb- und Effektmodul (I), mindestens ein wässriges Farbmodul (II) und mindestens ein wässriges pigmentfreies Mischlackmodul (III) oder
3. mindestens ein im wesentlichen wasserfreies Effektmodul (I), mindestens ein im wesentlichen wasserfreies Farbmodul (I), mindestens ein wässriges Farbmodul (II) und mindestens ein wässriges pigmentfreies Mischlackmodul (III) enthält.

5. Das Modulsystem nach einem der Ansprüche 1, 3 oder 4 und das Verfahren nach einem der Ansprüche 2 bis 4, **dadurch gekennzeichnet**, mindestens ein wässriger pigmentfreier Mischlacke (B) mindestens ein die Rheologie steuerndes Additiv als Lackadditiv (b4) enthält.

6. Das Modulsystem nach einem der Ansprüche 1 und 3 bis 5 und das Verfahren nach einem der Ansprüche 2 bis 5, **dadurch gekennzeichnet, dass** die Bindemittel (a21) und (b1) sowie gegebenenfalls das Bindemittel (a11)
(ii) funktionelle Gruppen, die durch Neutralisationsmittel in Anionen überführt werden können, und/oder anionische Gruppen, insbesondere Carbonsäure und/oder Carboxylatgruppen, enthalten.

7. Verwendung des Modulsystems nach einem der Ansprüche 1 und 3 bis 5 und des Verfahrens nach einem der Ansprüche 2 bis 5 in der Autoserienlackeriung, der Reparaturlackierung und der Beschichtung von Kunststoffen, insbesondere aber der Autoreparaturlackierung.

8. Verwendung des Modulsystems nach einem der Ansprüche 1, 3 bis 5 und des Verfahrens nach einem der Ansprüche 3 bis 5 für die Herstellung von Unidecklackschichten und Basislackschichten, insbesondere aber Basislackschichten, für die Autoserienlackierung, die Reparaturlackierung und die Beschichtung von Kunststoffen, insbesondere aber für die Autoreparaturlackierung.

9. Autoserien- und Autoreparaturlackierungen sowie Kunststofflackierungen, herstellbar mit Hilfe des Modulsystems gemäß einem der Ansprüche 1, 3 bis 5 und/oder mit Hilfe des Verfahrens gemäß einem der Ansprüche 2 bis 5.

10. Autoserien- und Autoreparaturlackierungen nach Anspruch 9, **dadurch gekennzeichnet, dass** es sich um farb- und/oder effektgebende Mehrschichtlackierungen handelt, insbesondere herstellbar nach dem Nass-in-Nass-Verfahren.

11. Gegenstände, insbesondere Automobilkarosserien und Kunststoffteile, welche Autoserien- und Autoreparaturlackierungen und/oder Kunststofflackierungen, gemäß Anspruch 9 oder 10 enthalten.

## Claims

1. Modular system for preparing aqueous coating materials, at least comprising
(I) at least one substantially water-free colour and/or effect module comprising
(A1) at least one substantially water-free, colour- and/or effect-imparting base colour comprising
(a11) 10 to 80% by weight of at least one water-dilutable or water-dispersible binder,
(a12) 0.5 to 70% by weight of at least one effect pigment and/or at least one colour pigment, and
(a13) 10 to 89.5% by weight of at least one organic solvent and also, if desired, comprising
(a14) at least one crosslinking agent and/or
(a15) at least one auxiliary and/or additive (coatings additive),
the sum of the parts by weight of components (a11) to (a13) in each case being 100% by weight;
(II) at least one aqueous colour module comprising
(A2) at least one aqueous colour-imparting base colour comprising
(a21) 10 to 80% by weight of at least one water-dilutable or water-dispersible binder,
(a22) 1 to 70% by weight of at least one inorganic colour pigment,
(a23) 89 to 20% by weight of water and
(a24) 0 to 20% by weight of at least one organic solvent, and also, if desired, comprising
(a25) at least one crosslinking agent and/or
(a26) at least one auxiliary and/or additive (coatings additive),
the sum of the parts by weight of components (a21) to (a24) in each case being 100% by weight; and
(III) at least one aqueous, pigment-free mixing varnish module comprising
(B) at least one pigment-free mixing varnish comprising
(b1) 10 to 80% by weight of at least one water-soluble or -dispersible binder and
(b2) 20 to 90% by weight of water, and also, if desired, comprising
(b3) at least one crosslinking agent and/or
(b4) at least one auxiliary and/or additive (coatings additive),
the sum of the parts by weight of constituents (b1) and (b2) in each case being 100% by weight; and also comprising
(IV) at least one pigment-free rheology module comprising
(C) 50 to 99.5% by weight, based on the total amount of rheology module (IV), of an aqueous medium comprising
(c1) 0.5 to 50% by weight, based on the total amount of rheology module (IV), of at least one rheology control additive;
with the proviso that the coatings additives (a15), (a26) and/or (b4) may also comprise at least one rheology control additive (c1), **characterized in that** the binders (a11), (a21) and (b1) are polyurethane resins.

2. Process for preparing an aqueous coating material with precisely defined shade and optical effect by mixing modules stored separately from one another and differing in material composition and function, shortly before the application of the coating material, where modules used are as follows:
(I) at least one substantially water-free colour and/or effect module comprising
(A1) at least one substantially water-free colour- and/or effect-imparting base colour comprising
(a11) 10 to 80% by weight of at least one water-dilutable or water-dispersible binder,
(a12) 0.5 to 70% by weight of at least one effect pigment and/or at least one colour pigment, and
(a13) 10 to 89.5% by weight of at least one organic solvent and also, if desired, comprising
(a14) at least one crosslinking agent and/or
(a15) at least one auxiliary and/or additive (coatings additive),
the sum of the parts by weight of components (a11) to (a13) in each case being 100% by weight;
(II) at least one aqueous colour module comprising
(A2) at least one aqueous colour-imparting base colour comprising
(a21) 10 to 80% by weight of at least one water-dilutable or water-dispersible binder,
(a22) 1 to 70% by weight of at least one inorganic colour pigment,
(a23) 89 to 20% by weight of water and
(a24) 0 to 20% by weight of at least one organic solvent, and also, if desired, comprising
(a25) at least one crosslinking agent and/or
(a26) at least one auxiliary and/or additive (coatings additive);
the sum of the parts by weight of components (a21) to (a24) in each case being 100% by weight; and
(III) at least one aqueous, pigment-free mixing varnish module comprising
(B) at least one pigment-free mixing varnish comprising
(b1) 10 to 80% by weight of at least one water-soluble or -dispersible binder and
(b2) 20 to 90% by weight of water, and also, if desired, comprising
(b3) at least one crosslinking agent and/or
(b4) at least one auxiliary and/or additive (coatings additive);
the sum of the parts by weight of constituents (b1) and (b2) in each case being 100% by weight; and also comprising
(IV) at least one pigment-free rheology module comprising
(C) 50 to 99.5% by weight, based on the total amount of rheology module (IV), of an aqueous medium comprising
(c1) 0.5 to 50% by weight, based on the total amount of rheology module (IV), of at least one rheology control additive;
with the proviso that the coatings additives (a15), (a26) and/or (b4) may also comprise at least one rheology control additive (c1), **characterized in that** the binders (a11), (a21) and (b1) are polyurethane resins.

3. The modular system according to Claim 1 and the process according to Claim 2, **characterized in that** the base colour (A1) imparts effect or both colour and effect.

4. The modular system according to Claim 1 or 3 and the process according to Claim 2 or 3, **characterized in that** the modular system comprises
1. at least one substantially water-free colour module (I), at least one aqueous colour module (II), and at least one aqueous, pigment-free mixing varnish module (III) or
2. at least one substantially water-free colour and effect module (I), at least one aqueous colour module (II), and at least one aqueous, pigment-free mixing varnish module (III), or
3. at least one substantially water-free effect module (I), at least one substantially water-free colour module (I), at least one aqueous colour module (II), and at least one aqueous, pigment-free mixing varnish module (III).

5. The modular system according to any of Claims 1, 3 and 4 and the process according to any of Claims 2 to 4, **characterized in that** at least one aqueous, pigment-free mixing varnish (B) comprises at least one rheology control additive as coatings additive (b4).

6. The modular system according to any of Claims 1 and 3 to 5 and the process according to any of Claims 2 to 5, **characterized in that** the binders (a21) and (b1) and also, if desired, the binder (a11) comprise
(ii) functional groups which can be converted into anions by neutralizing agents, and/or anionic groups, especially carboxylic acid and/or carboxylate groups.

7. Use of the modular system according to any of Claims 1 and 3 to 5 and of the process according to any of Claims 2 to 5 in automotive OEM finishing, refinish, and the coating of plastics, but especially automotive refinish.

8. Use of the modular system according to any of Claims 1, 3 to 5 and of the process according to any of Claims 3 to 5 for preparing solid-colour topcoats and basecoats, but especially basecoats, for automotive OEM finishing, refinish, and the coating of plastics, but especially automotive refinish.

9. Automotive OEM coatings or automotive refinishes, or else coatings on a plastic, producible using the modular system according to any of Claims 1, 3 to 5 and/or using the process according to any of Claims 2 to 5.

10. Automotive OEM coatings or automotive refinishes according to Claim 9, **characterized in that** they comprise multicoat colour and/or effect coating systems producible in particular by the wet-on-wet technique.

11. Articles, especially automobile bodies or plastics components, having automotive OEM finishes or automotive refinishes and/or coating on a plastic, according to Claim 9 or 10.

## Revendications

1. Système modulaire de préparation de matériaux aqueux de revêtement qui comprend :
(I) au moins un module de coloration et/ou d'effet essentiellement exempt d'eau et qui contient :
(A1) au moins une peinture de base essentiellement exempte d'eau pour coloration et/ou pour effet qui contient :
(a11) de 10 à 80% en poids d'au moins un liant apte à être dilué ou dispersé dans l'eau,
(a12) de 0,5 à 70% en poids d'au moins un pigment à effet et/ou d'au moins un pigment colorant et
(a13) de 10 à 89,5% en poids d'au moins un solvant organique, et qui contient le cas échéant
(a14) au moins un agent de réticulation et/ou
(a15) au moins une substance auxiliaire et/ou d'addition (additif de peintre),
la somme des proportions en poids des composants (a11) à (a13) étant de 100% en poids,
(II) au moins un module colorant aqueux qui contient :
(A2) au moins une peinture aqueuse de base pour coloration qui contient
(a21) de 10 à 80% en poids d'au moins un liant apte à être dilué ou dispersé dans l'eau,
(a22) de 1 à 70% en poids d'au moins un pigment minéral colorant,
(a23) de 89 à 20% en poids d'eau et
(a24) de 0 à 20% en poids d'au moins un solvant organique et qui contient le cas échéant
(a25) au moins un agent de réticulation et/ou
(a26) au moins une substance auxiliaire et/ou d'addition (additif de peinture),
la somme des proportions en poids des composants (a21) à (a24) étant à chaque fois de 100% en poids, et
(III) au moins un module aqueux de peinture mixte, exempt de pigment, qui contient:
(B) au moins une peinture mixte exempte de pigment et qui contient :
(b1) de 10 à 80% en poids d'au moins un liant soluble ou apte à être dispersé dans l'eau et
(b2) de 20 à 90% en poids d'eau, et qui contient le cas échéant
(b3) au moins un agent de réticulation et/ou (b4) au moins une substance auxiliaire et/ou d'addition (additif de peinture),
la somme des proportions en poids des composants (b1) et (b2) étant à chaque fois de 100% en poids et qui contient également :
(IV) au moins un module rhéologique exempt de pigment qui contient :
(C) de 50 à 99,5% en poids par rapport à la quantité totale du module rhéologique (IV) d'un milieu aqueux qui contient
(c1) de 0,5 à 50% en poids par rapport à la quantité totale du module rhéologique (IV) d'au moins un additif de contrôle de la rhéologie,
avec la condition que les additifs de peinture (a15), (a26) et/ou (b4) peuvent être également au moins un additif (c1) de contrôle de la rhéologie **caractérisé en ce que** les liants (a11), (a21) et (b1) sont des résines de polyuréthane.

2. Procédé de préparation d'un matériau aqueux de revêtement dont la teinte et l'effet optique sont définis de façon précise, par mélange de modules entreposés séparément les uns des autres et qui présentent une composition matérielle et une fonction différentes peu avant l'application du matériau de revêtement, dans lequel on utilise en tant que modules les suivants :
(I) au moins un module de coloration et/ou d'effet essentiellement exempt d'eau et qui contient :
(A1) au moins une peinture de base pour coloration et/ou pour effet essentiellement exempte d'eau qui contient :
(a11) de 10 à 80% en poids d'au moins un liant apte à être dilué ou dispersé dans l'eau,
(a12) de 0,5 à 70% en poids d'au moins un pigment à effet et/ou d'au moins un pigment colorant et
(a13) de 10 à 89,5% en poids d'au moins un solvant organique, et qui contient le cas échéant
(a14) au moins un agent de réticulation et/ou
(a15) au moins une substance auxiliaire et/ou d'addition (additif de peinture),
la somme des proportions en poids des composants (a11) à (a13) étant à chaque fois de 100% en poids,
(II) au moins un module colorant aqueux qui contient :
(A2) au moins une peinture aqueuse de base pour coloration qui contient
(a21) de 10 à 80% en poids d'au moins un liant apte à être dilué ou dispersé dans l'eau,
(a22) de 1 à 70% en poids d'au moins un pigment minéral colorant,
(a23) de 89 à 20% en poids d'eau et
(a24) de 0 à 20% en poids d'au moins un solvant organique et qui contient le cas échéant
(a25) au moins un agent de réticulation et/ou
(a26) au moins une substance auxiliaire et/ou d'addition (additif de peinture),
la somme des proportions en poids des composants (a21) à (a24) étant à chaque fois de 100% en poids, et
(III) au moins un module aqueux de peinture mixte, exempt de pigment, qui contient:
(B) au moins une peinture mixte exempte de pigment et qui contient :
(b1) de 10 à 80% en poids d'au moins un liant soluble ou apte à être dispersé dans l'eau et
(b2) de 20 à 90% en poids d'eau, et qui contient le cas échéant
(b3) au moins un agent de réticulation et/ou (b4) au moins une substance auxiliaire et/ou d'addition (additif de peinture),
la somme des proportions en poids des composants (b1) et (b2) étant à chaque fois de 100% en poids et qui contient également :
(IV) au moins un module rhéologique exempt de pigment qui contient :
(C) de 50 à 99,5% en poids par rapport à la quantité totale du module rhéologique (IV) d'un milieu aqueux qui contient
(c1) de 0,5 à 50% en poids par rapport à la quantité totale du module rhéologique (IV) d'au moins un additif de contrôle de la rhéologie,
avec la condition que les additifs de peinture (a15), (a26) et/ou (b4) peuvent être également au moins un additif (c1) de contrôle de la rhéologie **caractérisé en ce que** les liants (a11), (a21) et (b1) sont des résines de polyuréthane.

3. Système modulaire selon la revendication 1 et procédé selon la revendication 2, **caractérisés en ce que** la peinture de base (A1) est une peinture à effet ou une peinture de coloration et à effet.

4. Système modulaire selon les revendications 1 ou 3 et procédé selon la revendication 2 ou 3, **caractérisés en ce que** le système modulaire contient :
1. au moins un module colorant (I) essentiellement exempt d'eau, au moins un module aqueux colorant (II) et au moins un module aqueux (III) de peinture mixte exempt de pigment ou
2. au moins un module (I) colorant et à effet, essentiellement exempt d'eau, au moins un module colorant aqueux (II) et au moins un module aqueux de peinture mixte (III) exempt de pigment ou
3. au moins un module à effet (I) essentiellement exempt d'eau, au moins un module colorant (I) essentiellement exempt d'eau, au moins un module colorant aqueux (II) et au moins un module aqueux de peinture mixte (III) exempt de pigment.

5. Système modulaire selon l'une quelconque des revendications 1, 3 ou 4 et procédé selon l'une quelconque des revendications 2 à 4, **caractérisés en ce qu'**au moins une peinture aqueuse mixte (B) exempte de pigment contient comme additif de peinture (b4) au moins un additif de contrôle de la rhéologie.

6. Système modulaire selon l'une quelconque des revendications 1 et 3 à 5 et procédé selon l'une quelconque des revendications 2 à 5, **caractérisés en ce que** les liants (a21) et (b1) ainsi que le cas échéant le liant (a11) contiennent :
(ii) des groupes fonctionnels qui peuvent être convertis en anions par des agents de neutralisation et/ou des groupes anioniques et en particulier des groupes acide carboxylique et/ou carboxyle.

7. Utilisation du système modulaire selon l'une quelconque des revendications 1 et 3 à 5 et du procédé selon l'une quelconque des revendications 2 à 5 en peinture en série d'automobiles, en peinture de réparation et en revêtement de matières synthétiques, mais en particulier en peinture de réparation d'automobiles.

8. Utilisation du système modulaire selon l'une quelconque des revendications 1 et 3 à 5 et du procédé selon l'une des revendications 3 à 5 pour la réalisation de couches de peinture dites "unideck" et de couches de peinture de base, mais en particulier de couches de peinture de base pour la peinture en série d'automobiles, la peinture de réparation et le revêtement de matières synthétiques, mais en particulier pour la peinture de réparation d'automobiles.

9. Peintures en série d'automobiles et de réparation d'automobiles ainsi que peintures de matières synthétiques, qui peuvent être préparées à l'aide du système modulaire selon l'une quelconque des revendications 1, 3 à 5 et/ou à l'aide du procédé selon l'une quelconque des revendications 2 à 5.

10. Peintures en série d'automobiles et peintures de réparation d'automobiles selon la revendication 9, **caractérisées en ce que** ce sont des peintures multicouches de coloration et/ou d'effet qui peuvent être préparées en particulier par un procédé humide-humide.

11. Objets et en particulier carrosseries d'automobiles et pièces en matières synthétiques qui contiennent des peintures en série d'automobiles et des peintures de réparation d'automobiles et/ou des peintures de matières synthétiques selon la revendication 9 ou 10.
